# EUROPEAN PATENT APPLICATION

(11) **EP 4 708 750 A1**
(43) Date of publication of application: **11.03.2026**
(21) Application number: 24765518.6
(22) Date of filing: 26.07.2024
(51) Int. Cl.: H04L 5/00, H04W 84/12

(54) **DATA TRANSMISSION METHODS, AP, TERMINAL AND APPARATUS**

(71) Applicant: New H3C Technologies Co., Ltd., Hangzhou, Zhejiang 310052 (CN)
(72) Inventor: The designation of the inventor has not yet been filed
(74) Representative: IPAZ
(86) International application number: PCT/CN2024/107861
(87) International publication number: WO 2026/020460

(57) **Abstract**

The examples of the present disclosure provide a data transmission method, an AP, a terminal, and an apparatus, which relate to the field of communication technology and are applied to an AP. The method includes: performing data transmission with a terminal through subcarriers included in a MRU corresponding to the terminal; MRUs corresponding to different terminals are different; each MRU includes multiple distributed RUs, and subcarriers included in each distributed RU are spaced by other subcarriers that do not belong to the distributed RU; or performing data transmission with the terminal through subcarriers included in a distributed RU or a normal RU corresponding to the terminal; in all subcarriers except for preset Null subcarriers that do not participate in data transmission, subcarriers included in each normal RU are adjacent to each other; and distributed RUs and normal RUs constitute a Mix RU that is used by all terminals accessing the AP. Implementing the examples of the present application can achieve data transmission between the AP and the terminal based on the Orthogonal Frequency Division Multiple Access (OFDMA) mode.

## Description

### TECHNICAL FIELD

The present disclosure relates to the field of communication technology, particularly to a data transmission method, an Access Point (AP), a terminal and an apparatus.

### BACKGROUND

Orthogonal Frequency Division Multiple Access (OFDMA) is a multi-access technology based on Orthogonal Frequency Division Multiplexing (OFDM), which utilizes OFDM to subdivide the channel into subcarriers and then transmits data simultaneously to different terminals through different subcarriers. Unlike OFDM technology, OFDMA divides all subcarriers within the same bandwidth into several distributed Resource Units (RUs). Each group is referred to as a RU, which can be simultaneously allocated to different terminals for use.

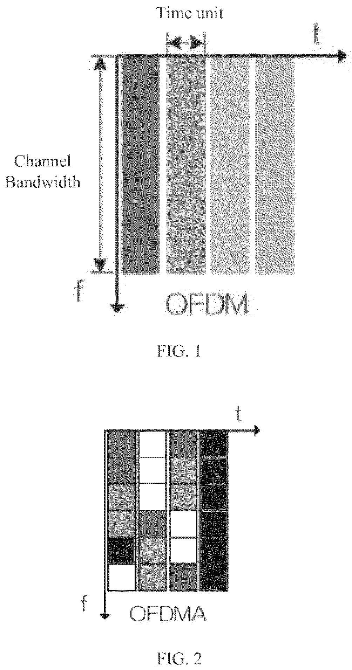

Referring to Fig. 1, Fig. 1 is a schematic diagram of an OFDM mode provided in related technologies.

In the figure, the horizontal axis represents a time domain (t), and the vertical axis represents a frequency domain (f). The different rectangles in the figure represent time-frequency domain resources within different unit durations. Different terminals use different time-frequency domain resources for data transmission, i.e., each terminal corresponds to a different time-frequency domain resource represented by a different rectangle respectively. It can be seen that in an OFDM operation mode, the time-frequency domain resource corresponding to each terminal occupies the entire channel bandwidth.

Referring to Fig. 2, Fig. 2 is a schematic diagram of an OFDMA mode provided in the related technologies.

In the figure, the horizontal axis represents the time domain (t), and the vertical axis represents the frequency domain (f). The squares of different colors in the figure represent RUs used by different terminals for data transmission. It can be seen that compared to the OFDM mode, the allocation of the time-frequency domain resources in the OFDMA mode is more flexible.

To leverage the characteristics of the OFDMA mode, a Wireless Local Area Network (WLAN) data transmission method between an Access Point (AP) and terminals based on the OFDMA mode needs to be provided.

### SUMMARY

The purpose of the examples of the present disclosure is to provide a data transmission method, an AP, a terminal, and an apparatus for realizing data transmission between an AP and a terminal based on the OFDMA mode. The specific technical solutions are as follows.

In a first aspect, examples of the present disclosure provide a data transmission method applied to an Access Point, AP, wherein the method includes:
performing data transmission with a terminal through subcarriers included in a Multi-Resource Unit (MRU) corresponding to the terminal;
wherein MRUs corresponding to different terminals are different; each MRU includes multiple distributed Resource Units, RUs, and subcarriers included in each distributed RU are spaced by other subcarriers that do not belong to the distributed RU;
   or
performing data transmission with the terminal through subcarriers included in a distributed RU or a normal RU corresponding to the terminal;
wherein subcarriers included in each distributed RU are spaced by other subcarriers that do not belong to the distributed RU; in all subcarriers except for preset Null subcarriers that do not participate in data transmission, subcarriers included in each normal RU are adjacent to each other; and distributed RUs and normal RUs constitute a Mix RU that is used by all terminals accessing the AP.

In a second aspect, examples of the present disclosure provide a data transmission method applied to a terminal, wherein the method includes:
performing data transmission with an AP through subcarriers included in a Multi-Resource Unit, MRU corresponding to the terminal;
wherein MRUs corresponding to different terminals are different; each MRU includes multiple distributed Resource Units, RUs, and subcarriers included in each distributed RU are spaced by other subcarriers that do not belong to the distributed RU;
   or
performing data transmission with the AP through subcarriers included in a distributed RU or a normal RU corresponding to the terminal;
wherein subcarriers included in each distributed RU are spaced by other subcarriers that do not belong to the distributed RU; in all subcarriers except for preset Null subcarriers that do not participate in data transmission, subcarriers included in each normal RU are adjacent to each other, and distributed RUs and normal RUs constitute a Mix RU that is used by all terminals accessing the AP.

In a third aspect, examples of the present disclosure provide an Access Point, AP, wherein the AP includes:
a processor;
a transceiver;
a machine-readable storage medium, wherein the machine-readable storage medium stores machine-executable instructions that can be executed by the processor; and the machine-executable instructions cause the processor to execute any one of the method blocks described in the first aspect.

In a fourth aspect, examples of the present disclosure provide a terminal, wherein the terminal includes:
a processor;
a transceiver;
a machine-readable storage medium, wherein the machine-readable storage medium stores machine-executable instructions that can be executed by the processor; and the machine-executable instructions cause the processor to execute any one of the method blocks described in the second aspect.

In a fifth aspect, examples of the present disclosure provide a data transmission apparatus applied to an Access Point, AP, wherein the apparatus includes:
a first data transmission module, to perform data transmission with a terminal through subcarriers included in a Multi-Resource Unit, MRU corresponding to the terminal;
wherein MRUs corresponding to different terminals are different; each MRU includes multiple distributed Resource Units, RUs, and subcarriers included in each distributed RU are spaced by other subcarriers that do not belong to the distributed RU;
   or
a second data transmission module, to perform data transmission with the terminal through subcarriers included in a distributed RU or a normal RU corresponding to the terminal;
wherein subcarriers included in each distributed RU are spaced by other subcarriers that do not belong to the distributed RU; in all subcarriers except for preset Null subcarriers that do not participate in data transmission, subcarriers included in each normal RU are adjacent to each other, and distributed RUs and normal RUs constitute a Mix RU that is used by all terminals accessing the AP.

In a sixth aspect, examples of the present disclosure provide a data transmission apparatus applied to a terminal, wherein the apparatus includes:
a third data transmission module, to perform data transmission with an AP through subcarriers included in a Multi-Resource Unit, MRU corresponding to the terminal;
wherein MRUs corresponding to different terminals are different; each MRU includes multiple distributed Resource Units, RUs, and subcarriers included in each distributed RU are spaced by other subcarriers that do not belong to the distributed RU;
   or
a fourth data transmission module, to perform data transmission with the AP through subcarriers included in a distributed RU or a normal RU corresponding to the terminal;
wherein subcarriers included in each distributed RU are spaced by other subcarriers that do not belong to the distributed RU; in all subcarriers except for preset Null subcarriers that do not participate in data transmission, subcarriers included in each normal RU are adjacent to each other, and distributed RUs and normal RUs constitute a Mix RU that is used by all terminals accessing the AP.

In a seventh aspect, examples of the present disclosure provide a machine-readable storage medium, wherein the machine-readable storage medium stores machine-executable instructions, which, when called and executed by a processor, cause the processor to implement any one of the methods described in the first or second aspects.

In an eighth aspect, examples of the present disclosure provide a computer program product, wherein the computer program product causes a processor to implement any one of the methods described in the first or second aspects.

The examples of the present disclosure bring the following beneficial effects.

In the solutions provided by the examples of the present disclosure, the AP is communicated with the terminal through the MRU or the Mix RU. The MRU includes multiple distributed RUs. A Mix RU corresponding to some terminals is a distributed RU, and a Mix RU corresponding to the other terminals is a normal RU. Therefore, the AP can be communicated with the terminal through the subcarriers in the distributed RU. Since the subcarriers in the distributed RU are spaced by other subcarriers that do not belong to the distributed RU, the distribution of subcarriers corresponding to the same terminal is relatively dispersed. If there is a signal attenuation in a short period of time, it will lead to a decrease in the data transmission quality of multiple subcarriers located sequentially within the time period of signal attenuation. In this case, if the subcarriers corresponding to the same terminal are continuously arranged without spacing, it will to a general decrease in the data transmission quality for the subcarriers corresponding to the terminal, thereby affecting the overall data transmission quality of the terminal. However, in the present disclosure, the distribution of subcarriers in the distributed RU is relatively dispersed, so even if there is a problem of a signal attenuation in a short period of time, it will only affect a small number of subcarriers in some distributed RUs. For the terminal communicating by using such distributed RUs, it will only affect a small number of subcarriers used by that terminal, and will not affect the overall data transmission of the terminal. Furthermore, since the subcarriers corresponding to the terminal are relatively dispersed, when the AP transmits a signal to the terminal through one subcarrier, the AP can concentrate the power of adjacent subcarriers that do not correspond to the terminal and are not used to complete data transmission together. This can increase the power of the signal, increase the coverage radius of the signal, and thus enhance the coverage radius of the AP cell. It can also enhance the PSD between the AP and the terminal and enhance the balance of uplink and downlink power.

### BRIEF DESCRIPTION OF THE DRAWINGS

In order to illustrate the technical solutions in the examples of the present disclosure or the prior art more clearly, the drawings required in the description of the examples or the prior art will be briefly introduced below. It is obvious that the drawings in the following description are for merely some examples of the present disclosure. For ordinary skilled in the art, other examples can be obtained based on these drawings without any creative efforts.
Fig. 1 is a schematic diagram of an OFDM mode provided in the related technologies;
Fig. 2 is a schematic diagram of an OFDMA mode provided in the related technologies;
Fig. 3 is a schematic diagram of a RU for Wi-Fi 6 provided in the related technologies;
Fig. 4 is a schematic diagram of a RU for Wi-Fi 7 provided in the related technologies;
Fig. 5 is a schematic distribution diagram of a first type of distributed RUs provided in an example of the present disclosure;
Fig. 6 is a schematic distribution diagram of a second type of distributed RUs provided in an example of the present disclosure;
Fig. 7 is a schematic distribution diagram of a first type of Mix RUs provided in the an example of the present disclosure;
Fig. 8 is a schematic distribution diagram of a third type of distributed RUs provided in an example of the present disclosure;
Fig. 9 is a schematic distribution diagram of a fourth type of distributed RUs provided in an example of the present disclosure;
Fig. 10 is a schematic distribution diagram of a second type of Mix RUs provided in an example of the present disclosure;
Fig. 11 is a schematic position diagram of a first type of Null subcarriers provided in an example of the present disclosure;
Fig. 12 is a schematic position diagram of a second type of Null subcarriers provided in an example of the present disclosure;
Fig. 13 is a schematic position diagram of a third type of Null subcarriers provided in an example of the present disclosure;
Fig. 14 is a schematic diagram of a multi-user transmission process for DL PPDU based on dRU resources provided in an example of the present disclosure;
Fig. 15 is a schematic diagram of a multi-user transmission process for UL PPDU based on dRU resources provided in an example of the present disclosure;
Fig. 16 is a schematic structure diagram of an AP provided in an example of the present disclosure;
Fig. 17 is a schematic structure diagram of a terminal provided in an example of the present disclosure.

### DETAILED DESCRIPTION

The technical solutions in the examples of the present disclosure will be described clearly and completely below in conjunction with the drawings in the examples of the present disclosure. It is obvious that the examples described are merely some of the examples of the present disclosure, rather than all of them. Based on the examples in the present disclosure, all other examples obtained by ordinary skilled in the art fall within the scope of the present disclosure without making creative efforts.

In order to represent the differences between the present disclosure and the related technologies, the related technologies will first be described.

Prior to Wi-Fi (Wireless Fidelity) 6, Wi-Fi protocol standards primarily employed an OFDM modulation, in which a channel is divided into multiple subcarriers, enhancing speed while providing strong anti-interference capabilities. However, a single channel could only serve one user at a time. Wi-Fi 6 introduces an OFDMA technology, in which subcarrier bandwidths are narrower and a concept of Resource Units (RUs) is introduced, allowing a single channel to serve multiple users simultaneously. In Wi-Fi 6, each RU simultaneously includes data subcarriers and pilot subcarriers. For example, a smallest 26-tone RU consists of 24 data subcarriers and 2 pilot subcarriers, while a 52-tone RU includes 48 data subcarriers and 4 pilot subcarriers. For more detailed information, please refer to the detailed introduction in the protocol. The data subcarriers are used for transmitting data, while the pilot subcarriers are used for transmitting phase and orbital parameters. Additionally, there are unused or Null subcarriers that do not transmit data and are often used for boundary protection.

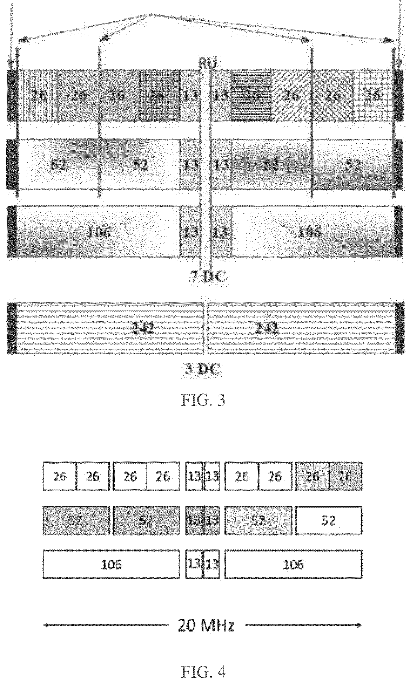

Referring to Fig. 3, Fig. 3 is a schematic diagram of a RU for Wi-Fi 6 provided in the related technologies.

As shown in Fig. 3, the horizontal axis represents a frequency domain, and the vertical axis represents a time domain. Each rectangle in the figure represents a time-frequency domain resource. Taking a bandwidth of 20MHz as an example, it can be seen that there are a total of 9 26-tone RUs under the bandwidth of 20MHz. 8 rectangles marked as 26 represent 8 26-tone RUs, and 2 rectangles marked as 13 between the rectangles marked as 26 are formed as one 26-tone RU. The subcarriers indexed as -69, -3 to +3, and +69, indicated by arrows, are Null subcarriers that do not transmit any data. The subcarriers indexed as -3 to +3 are used as 7 Direct Current (DC) subcarriers. Additionally, 6 Null subcarriers on the left side and 5 Null subcarriers on the right side are used for boundary protection. Both uplink and downlink transmissions support 26-tone RUs, 52-tone RUs marked as 52 in the figure, 106-tone RUs marked as 106 in the figure, 242-tone RUs marked as 242 in the figure, as well as 484-tone RUs, 996-tone RUs, 2x996-tone RUs and like, which are not shown in the figure. Between the 242-tone RUs, there are 3 DC subcarriers.

In Wi-Fi 6, each terminal can only use a single RU resource, which lacks flexibility. On this basis, Wi-Fi 7 breaks this limitation, in which one terminal is allowed to occupy multiple RU resources simultaneously, and RUs with different sizes (i.e., including different numbers of subcarriers) can be combined with each other. However, in order to reduce the implementation complexity and balance the spectrum resource utilization efficiency, some restrictions are imposed. Only small RUs, in which the occupied spectrum resource is less than 20MHz, can be combined with each other, and large RUs, in which the occupied spectrum resource is equal to or more than 20MHz, can be combined with each other. The small RUs cannot be combined with the large RUs.

Referring to Fig. 4, Fig. 4 is a schematic diagram of a RU for Wi-Fi 7 provided in the related technologies.

The distribution of RUs shown in Fig. 4 is similar to the distribution of RUs shown in Fig. 3. Compared to Fig. 3, the 242-tone RUs are omitted in Fig. 4. In Fig. 4, non-white RUs are RUs occupied by terminals. Different RUs can be occupied by different terminals.

However, there are issues in the related technologies. Firstly, in Wi-Fi 6, each terminal occupies one RU, and the RUs are formed in form of continuous distributed RUs. That is, the subcarriers that each terminal can use are continuous. In Wi-Fi 7, although the terminal can occupy multiple RUs, the RUs are still formed in form of continuous distributed RUs, so that most of the subcarriers used by the terminal are still continuous.

In such cases, for a Low Power Indoor (LPI) scenario, since an AP needs to continuously transmit data with the same terminal on continuous subcarriers, and the power of the AP is low, the energy of the AP which can be used to transmit data with the terminal on each subcarrier is low. This results in a very low Power Spectral Density (PSD) sent by the AP and the terminal. This, in turn, leads to a reduced AP cell coverage and an imbalanced uplink and downlink transmission power between the AP and the terminal.

Moreover, if there is a problem of signal attenuation in a short period of time, all continuous subcarriers during the short period of time will experience signal transmission issues. If the subcarriers occupied by the terminal are exactly these subcarriers, the terminal cannot transmit data normally during the period of time.

In order to solve the above problems, the examples of the present disclosure provide a data transmission method, an AP, a terminal, and an apparatus.

In one example of the present disclosure, the AP can achieve data transmission through either Block A or Block B below.

Block A: performing data transmission with a terminal through subcarriers included in a MRU corresponding to the terminal.

MRUs corresponding to different terminals are different; each MRU includes multiple distributed RUs, and subcarriers included in each distributed RU are spaced by other subcarriers that do not belong to the distributed RU.

Block B: performing data transmission with the terminal through subcarriers included in a distributed RU or a normal RU corresponding to the terminal.

Subcarriers included in each distributed RU are spaced by other subcarriers that do not belong to the distributed RU. In all subcarriers except for preset Null subcarriers that do not participate in data transmission, subcarriers included in each normal RU are adjacent to each other. Distributed RUs and normal RUs constitute a Mix RU that is used by all terminals accessing the AP. In other words, in all terminals accessing the AP, some use the distributed RUs, and others use the normal RUs.

Specifically, distributed RUs can be referred to as Distributed Resource Units (dRUs), and a number of subcarriers included in each distributed RU is 26, or other numbers such as 52, 106 and like. The examples of the present disclosure do not limit the number of subcarriers included in each distributed RU.

In one example of the present disclosure, the number of subcarriers included in the aforementioned distributed RU or normal RU can be set according to requirements. To maintain consistency with the protocol standards of Wi-Fi 6 and Wi-Fi 7, the distributed RU or normal RU can include 26 subcarriers, and this distributed RU or normal RU can be referred to as 26-tone.

In a further example of the present disclosure, the numbers of subcarriers included in RUs corresponding to different data transmission bandwidths can be the same or different. For example, when the data transmission bandwidth is 20MHz or 40MHz, the number of subcarriers included in each RU is 26. When the data transmission bandwidth is 80MHz, the number of subcarriers included in each RU can be larger, such as 52. If a RU includes 52 subcarriers, this RU can be referred to as 52-tone.

Alternatively, if a RU includes 104 subcarriers, the RU can be referred to as 104-tone. If there are 106 subcarriers, the RU can include 104 non-Null subcarriers that is used for data transmission and 2 Null subcarriers that is not used for data transmission, and this RU can be referred to as 106-tone. The 2 Null subcarriers can be located on both sides of all non-Null subcarriers for boundary protection. The 2 Null subcarriers can also be located at any preset position between the non-Null subcarriers, which is not limited in the example.

Furthermore, the number of other subcarriers spacing two sequentially adjacent subcarriers in a same distributed RU can be fixed or different. For example, the two sequentially adjacent subcarriers in a same distributed RU can be fixedly spaced by 3 other subcarriers. Alternatively, the first and second subcarriers are spaced by 2 other subcarriers, and the second and third subcarriers are spaced by 4 other subcarriers, and so on. Allocating a fixed number of subcarriers to a distributed RU can reduce configuration complexity, but the examples of the present disclosure are not limited to this approach.

In addition, the examples of the present disclosure are applicable to any terminal communicatively connected to the AP, which can be a Station (STA) or a user terminal such as a mobile phone, a computer and like. The terminal performs data transmission with the AP through the subcarriers included in its corresponding RU, and only uplink data or downlink data can be transmitted on one subcarrier.

In one example of the present disclosure, the MRU can include 2 distributed RUs, 3 distributed RUs, 4 distributed RUs and like.

In a further example of the present disclosure, a Mix Resource Unit can be referred to as a Mix RU. For example, The Mix RU can include a total of 4 distributed RUs and 4 normal RUs, or 4 distributed RUs and 2 normal RUs. The normal RU can be referred to as a Normal Resource Unit (NRU). The number of subcarriers included in the normal RU can be 26, 52 or 106, which is not limited in the examples of the present disclosure.

It can be seen from the above that the AP is communicated with the terminal through the MRU or the Mix RU. The MRU includes multiple distributed RUs. A Mix RU corresponding to some terminals is a distributed RU, and a Mix RU corresponding to the other terminals is a normal RU. Therefore, the AP can be communicated with the terminal through the subcarriers in the distributed RU. Since the subcarriers in the distributed RU are spaced by subcarriers that do not belong to the distributed RU, the distribution of subcarriers corresponding to the same terminal is relatively dispersed. If there is a signal attenuation in a short period of time, it will lead to a decrease in the data transmission quality of multiple subcarriers located sequentially within the time period of signal attenuation. In this case, if the subcarriers corresponding to the same terminal are continuously arranged without spacing, it will lead to a general decrease in the data transmission quality of the subcarriers corresponding to the terminal, thereby affecting the overall data transmission quality of the terminal. However, in the present disclosure, the distribution of subcarriers in the distributed RU is relatively dispersed, so even if there is a problem of a signal attenuation in a short period of time, it will only affect a small number of subcarriers in some distributed RUs. For the terminal communicating by using such distributed RUs, it will only affect a small number of subcarriers used by the terminal and will not affect the overall data transmission of the terminal. Furthermore, since the subcarriers corresponding to the terminal are relatively dispersed, when the AP transmits a signal to the terminal through one subcarrier, the AP can concentrate the power of adjacent subcarriers that do not correspond to the terminal and are not used to complete data transmission together. This can increase the power of the signal, increase the coverage radius of the signal, and thus enhance the coverage radius of the AP cell. It can also enhance the PSD between the AP and the terminal and enhance the balance of uplink and downlink power.

In one example of the present disclosure, when the number of other subcarriers that space two sequentially adjacent subcarriers in a same distributed RU and do not belong to the distributed RU is not fixed, a fourth preset number can be set. When allocating subcarriers included in the distributed RUs, every consecutive set of the fourth preset number of subcarriers, except for subcarriers that do not participate in the distributed RU allocation, is taken as a group. When there is spacing between subcarriers in a same distributed RU, each subcarrier in a group is arbitrarily allocated to different distributed RUs.

In a further example of the present disclosure, when the number of other subcarriers that space two sequentially adjacent subcarriers in a same distributed RU and do not belong to the distributed RU is fixed, the aforementioned method further includes the following Block C:
Block C: in all subcarriers except for preset subcarriers that do not participate in the distributed RU allocation, arranging the remaining subcarriers in order of indexes of the subcarriers; between every two subcarriers belonging to a same distributed RU, placing a first preset number of subcarriers belonging to other distributed RUs.

The preset subcarriers that do not participate in distributed RU allocation include preset Null subcarriers that do not participate in data transmission.

That is, in the distributed RUs except for the preset subcarriers that do not participate in the distributed RU allocation, two sequentially adjacent subcarriers are spaced by the first preset number of subcarriers.

In this case, the index of the aforementioned distributed RU is represented by an index of the first subcarrier, an index of the last subcarrier included in the distributed RU, and a first value. The first value is the sum of the first preset number and a second value, wherein the second value can be 1, 2, 3 and like. For ease of description, the first value in all examples below is uniformly set to 1.

Alternatively, regardless of whether the number of other subcarriers that space two sequentially adjacent subcarriers in a same distributed RU is fixed, for each distributed RU, the indexes of all subcarriers belonging to the distributed RU can be recorded separately as an index of the distributed RU.

In one example of the present disclosure, when the data transmission bandwidth is 20MHz, the aforementioned first preset number is 3 or 8. It should be noted that 3 or 8 as the first preset number is merely a preferred example and can be adjusted as needed in practical applications.

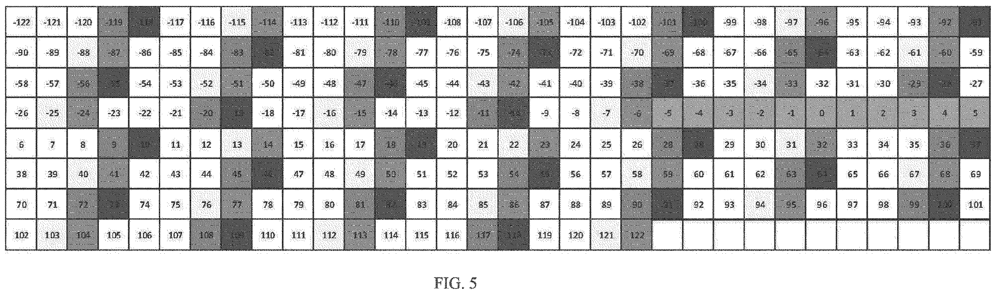

Referring to Fig. 5, Fig. 5 is a schematic distribution diagram of a first type of distributed RUs provided in an example of the present disclosure.

Fig. 5 shows the distribution of 9 distributed RUs when the data transmission bandwidth is 20MHz, the RU corresponding to the terminal is a MRU, each distributed RU includes 26 subcarriers, and the first preset number is 8.

Each square in the figure represents one subcarrier, and the number on each subcarrier represents its index. There are a total of 245 subcarriers ranging from -122 to 122. The vertical axis represents the frequency domain, and the horizontal axis represents the time domain. The subcarriers indexed as -5 to 5 are Null subcarriers, which in this example belong to the preset subcarriers that do not participate in the distributed RU allocation. Except for such subcarriers, the subcarriers indexed as -122, -113, -104, -95, -86, -77, -68, -59, -50, -41, -32, -23, -14, 6, 15, 24, 33, 42, 51, 60, 69, 78, 87, 96, 105, 114 belong to one distributed RU. The subcarriers indexed as -121, -112, -103, -94, -85, -76, -67, -58, -49, -40, -31. -22, -13, 7, 16, 25, 34, 43, 52, 61, 70, 79, 88, 97, 106, 115 belong to one distributed RU. The subcarriers indexed as -120, -111, -102, -93, -84, -75, -66, -57, -48, -39, -30, -21, -12, 8, 17, 26, 35, 44, 53, 62, 71, 80, 89, 98, 107, 116 belong to one distributed RU. The subcarriers indexed as -119, -110, -101, -92, -83, -74, -65, -56, -47, -38, -29, -20, -11, 9, 18, 27, 36, 45, 54, 63, 72, 81, 90, 99, 108, 117 belong to one distributed RU. The subcarriers indexed as -118, -109, -100, -91, -82, -73, -64, -55, -46, -37, -28, -19, -10, 10, 19, 28, 37, 46, 55, 64, 73, 82, 91, 100, 109, 118 belong to one distributed RU. The subcarriers indexed as -117, -108, -99, -90, -81, -72, -63, -54, -45, -36, -27, -18, -9, 11, 20, 29, 38, 47, 56, 65, 74, 83, 92, 101, 110, 119 belong to one distributed RU. The subcarriers indexed as -116, -107, -98, -89, -80, -71, -62, -53, -44, -35, -26, -17, -8, 12, 21, 30, 39, 48, 57, 66, 75, 84, 93, 102, 111, 120 belong to one distributed RU. The subcarriers indexed as -115, -106, -97, -88, -79, -70, -61, -52, -43, -34, -25, -16, -7, 13, 22, 31, 40, 49, 58, 67, 76, 85, 94, 103, 112, 121 belong to one distributed RU. The subcarriers indexed as -114, -105, -96, -87, -78, -69, -60, -51, -42, -33, -24, -15, -6, 14, 23, 32, 41, 50, 59, 68, 77, 86, 95, 104, 113, 122 belong to one distributed RU. As shown in the figure, except for the Null subcarriers, for each distributed RU, every two subcarriers belonging to a same distributed RU are spaced by 8 subcarriers belonging to other distributed RUs.

**It** can be observed that the frequency domain positions of the subcarriers in each distributed RU span the entire bandwidth of 20MHz. Using the representation method described earlier, the indexes of the subcarriers in each dRU can be represented as: dRU1: [-122:9:114], dRU2: [-121:9:115], dRU3: [-120:9:116], dRU4: [-119:9:117], dRU5: [-118:9:118], dRU6: [-117:9:119], dRU7: [-116:9:120], dRU8: [-115:9:121], dRU9: [-114:9:122].

Taking dRU1 as an example to explain the above representation method, [-122:9:114] represents that the index of the first subcarrier included in dRU1 is -122. The first value is: the first preset number (8) + the second value (1) = 9, representing that there is one subcarrier belonging to dRU1 in every 9 subcarriers. The index of the last subcarrier is 114. By analogy, the indexes of subcarriers in each dRU can be determined.

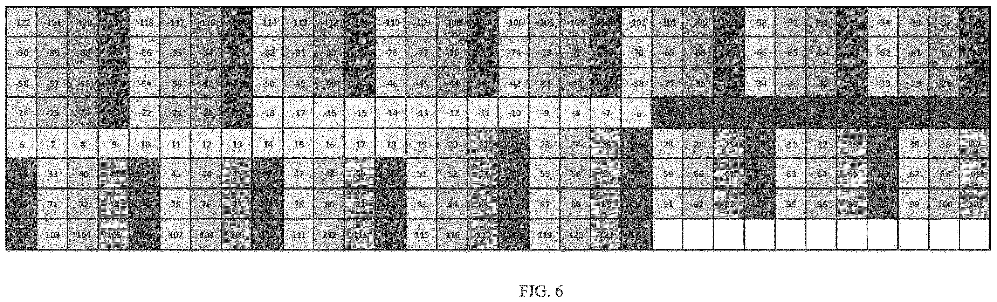

Referring to Fig. 6, Fig. 6 is a schematic distribution diagram of a second type of distributed RUs provided in an example of the present disclosure.

Fig. 6 shows the distribution of 8 distributed RUs when the data transmission bandwidth is 20MHz, the terminal corresponds to a MRU, each distributed RU includes 26 subcarriers, and the first preset number is 3.

Each square in the figure represents one subcarrier, and the number on each subcarrier represents its index. There are a total of 245 subcarriers ranging from -122 to 122. The vertical axis represents the frequency domain, and the horizontal axis represents the time domain. The subcarriers indexed as -18 to 18 in the figure belong to the preset subcarriers that do not participate in the distributed RU allocation in this example, wherein the subcarriers indexed as -5 to 5 are Null subcarriers. Except for the subcarriers that do not participate in the distributed RU allocation, subcarriers with a same color intensity in the subcarriers indexed as -122 to -19 in the figure belong to a same distributed RU. Subcarriers with a same color intensity in the subcarriers indexed as 19 to 122 belong to a same distributed RU. As shown in the figure, except for the subcarriers indexed as -18 to 18, for each distributed RUs, every two subcarriers belonging to a same distributed RU are spaced by 3 subcarriers belonging to other distributed RUs.

The Subcarriers indexed as -18 to -6 and 6 to 18 can be configured as Null subcarriers or as normal RUs.

It can be observed that the frequency domain positions of the subcarriers in each distributed RU span half of the bandwidth of 20MHz, i.e., 10MHz. Using the representation method described earlier, the index of each distributed dRU can be represented as: dRU1: [-122:4:-22], dRU2: [-121:4:-21], dRU3: [-120:4:-20], dRU4: [-119:4:-19], dRU5: [-18:-6;6:18] or Null subcarriers, dRU6: [19:4:119], dRU7: [20:4:120], dRU8: [21:4:121], dRU9: [22:4:122].

The representation of the subcarriers in dRU1-dRU4 and dRU6-dRU9 is the same as the representation of the subcarriers in the distributed RUs in Fig. 5 described earlier, and will not be repeated here. dRU5: [-18:-6;6:18] represents that the subcarriers in dRU5 are the subcarriers indexed as -18 to -6 and 6 to 18. It should be noted that for ease of description, the RU occupying positions [-18:-6;6:18] is referred to as dRU, and the subcarriers in this RU can be used for data transmission or configured as Null subcarriers.

Based on this, referring to Table 1, Table 1 is an indication table of a first type of distributed RUs provided in an example of the present disclosure.

**Table 1**

| dRU Type | dRU index and subcarrier range | | | | |
|---|---|---|---|---|---|
| 26-tone dRU type 1 (i.e., the first value is 9) 20MHz | dRU1 [-122:9:114] | dRU2 [-121:9:115] | dRU3 [-120:9:116] | dRU4 [-119:9:117] | dRU5 [-118:9:118] |
| | dRU6 [-117:9:119] | dRU7 [-116:9:120] | dRU8 [-115:9:121] | dRU9 [-114:9:122] | |
| 26-tone dRU type 2 (i.e., the first value is 4) 20MHz | dRU1 [-122:4:-22] | dRU2 [-121:4:-21] | dRU3 [-120:4:-20] | dRU4 [-119:4:-19] | dRU5 [-18:-6;6:18] or Null subcarriers |
| | dRU6 [19:4:119] | dRU7 [20:4:120] | dRU8 [21:4:121] | dRU9 [22:4:122] | |

Table 1 is established based on the allocation methods shown in Fig. 5 and Fig. 6 mentioned earlier. It should be noted that this example does not limit the first preset number, and does not limit the number of other subcarriers spacing sequentially adjacent subcarriers included in a same distributed RU to be fixed. Table 1 is merely one form of allocation.

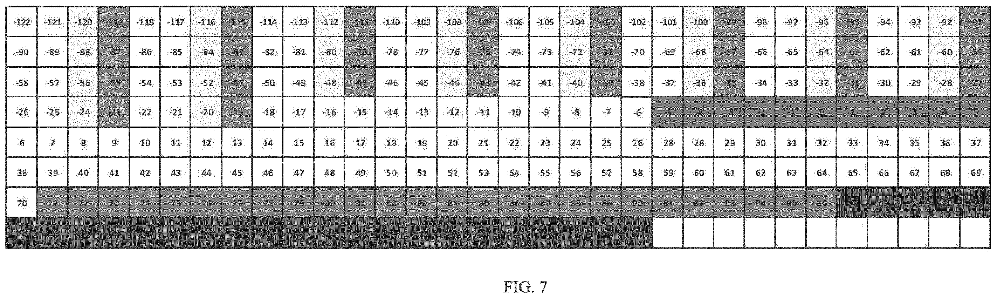

In a further allocation method, some of the subcarriers in the transmission bandwidth belong to distributed RUs, and some others belong to normal RUs. Referring to Fig. 7, Fig. 7 is a schematic distribution diagram of a first type of Mix RUs provided in an example of the present disclosure.

Fig. 7 shows the distribution of 4 distributed RUs and 4 normal RUs when the data transmission bandwidth is 20MHz, the RU corresponding to the terminal is Mix RU, each distributed RU includes 26 subcarriers, and the first preset number is 3. The distribution of distributed RUs to which the subcarriers indexed as -122 to -19 belong in Fig. 7 is the same as the example shown in Fig. 6 and will not be repeated here.

Each square in the figure represents one subcarrier, and the number on each subcarrier represents its index. There are a total of 245 subcarriers ranging from -122 to 122. The vertical direction represents the frequency domain, and the horizontal direction represents the time domain. The subcarriers indexed as -18 to 122 in the figure belong to the preset subcarriers that do not participate in the distributed RU allocation in this example, wherein the subcarriers indexed from -5 to 5 are Null subcarriers. Except for the subcarriers that do not participate in the distributed RU allocation, subcarriers with a same color intensity in the subcarriers indexed as -122 to -19 in the figure belong to a same distributed RU. As shown in the figure, except for the subcarriers indexed as -18 to 122, for each distributed RU, every two subcarriers belonging to a same distributed RU are spaced by 3 subcarriers belonging to other distributed RUs, i.e., the first preset number is 3.

The subcarriers indexed as -18 to -6 and 6 to 18 do not participate in the distributed RU allocation, and these subcarriers can be configured as Null subcarriers or as normal RUs.

In addition, the subcarriers indexed as 19 to 122 are configured as normal RUs. The subcarriers indexed as 19 to 44 belong to one normal RU. The subcarriers indexed as 45 to 70 belong to one normal RU. The subcarriers indexed as 71 to 96 belong to one normal RU. The subcarriers indexed as 97 to 122 belong to one normal RU. There are 4 normal RUs in the figure, each including 26 subcarriers that are adjacent to each other.

As can be seen from the figure, the frequency domain positions of the subcarriers of each distributed RU span half of 20MHz, i.e., 10MHz. The representation method of each distributed RU can refer to the description of Fig. 6 earlier, which will not be repeated here. The index of each normal RU can be represented by the index of the first subcarrier and the index of the last subcarrier included in that normal RU. Then, the index of NRU5 composed of the subcarriers indexed as 19 to 44 can be represented as [19:44], the index of NRU6 composed of the subcarriers indexed as 45 to 70 can be represented as [45:70], the index of NRU7 composed of the subcarriers indexed as 71 to 96 can be represented as [71:96], and the index of NRU8 composed of the subcarriers indexed as 97 to 122 can be represented as [97:122].

In a further example of the present disclosure, the index of a normal RU can be represented by the index of the first subcarrier and the number of subcarriers included. For example, the index of NRU5 can be represented as [19:26], the index of NRU6 can be represented as [45:26], the index of NRU7 can be represented as [71:26], the index of NRU8 can be represented as [97:26], and so on.

In addition, when a NRU includes 52 subcarriers, the index of NRU5 can be represented as [19:70], the index of NRU6 can be represented as [71:122], and so on.

Based on this, referring Table 2, Table 2 is an indication table of a first type of RUs provided in an example of the present disclosure.

**Table 2**

| RU Type | RU index and subcarrier range | | | | |
|---|---|---|---|---|---|
| 26-tone dRU, 26-tone NRU type2 (i.e., the first value is 4) 20MHz | dRU1 [-122:4:-22] | dRU2 [-121:4:-21] | dRU3 [-120:4:-20] | dRU4 [-119:4:-19] | dRU5 [-18:-6;6:18] or Null subcarriers |
| | NRU5 [19:44] | NRU6 [45:70] | NRU7 [71:96] | NRU8 [97:122] | |
| 26-tone dRU, 52-tone NRU type2 (i.e., the first value is 4) 20MHz | dRU1 [-122:4:-22] | dRU2 [-121:4:-21] | dRU3 [-120:4:-20] | dRU4 [-119:4:-19] | dRU5 [-18:-6;6:18] or Null subcarriers |
| | NRU5 [19:70] | NRU6 [71:122] | | | |

In a further example of the present disclosure, when the data transmission bandwidth is 40MHz, the aforementioned first preset number is 8 or 17. It should be noted that 8 or 17 as the first preset number is merely a preferred example and can be adjusted as needed in practical applications.

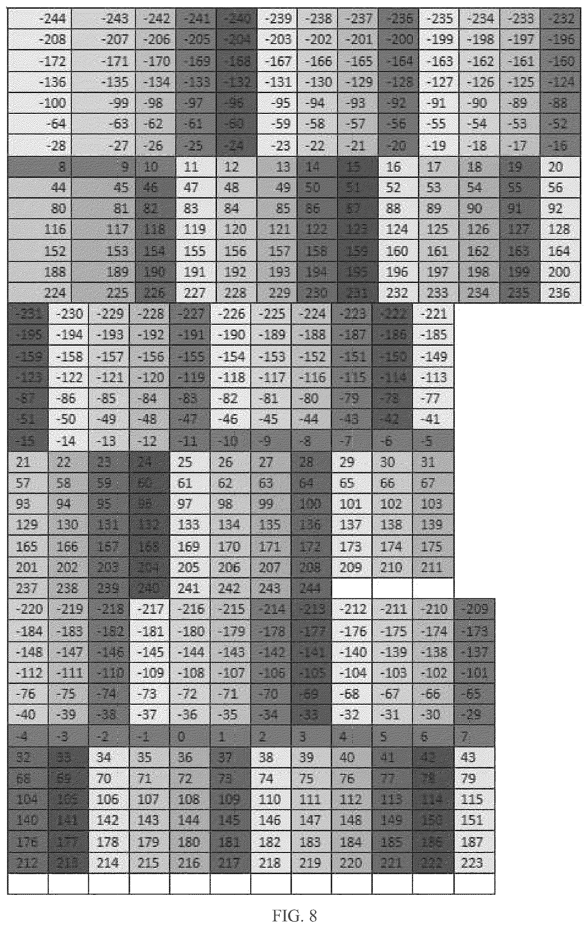

Referring to Fig. 8, Fig. 8 is a schematic distribution diagram of a third type of distributed RUs provided in an example of the present disclosure.

Fig. 8 illustrates the distribution of 18 distributed RUs when the data transmission bandwidth is 40MHz, each distributed RU includes 26 subcarriers, and the first preset number is 8.

Each rectangle in the figure represents one subcarrier, and the number on each subcarrier represents its index. There are a total of 489 subcarriers ranging from -244 to 244. Due to the image size, the complete image is divided into three parts for display in the figure. The actual arrangement order of the three parts from top to bottom in Fig. 8 should be that the first image is located on the left of the second image, and the second image is located on the left of the third image.

In the figure, the vertical direction represents the frequency domain, and the horizontal direction represents the time domain. The subcarriers indexed as -10 to 10 in the figure are Null subcarriers, which are preset subcarriers that do not participate in the distributed RU allocation in this example. Except for such subcarriers, the subcarriers indexed as -244, -235, -226, -217, -208, -199, -190, -181, -172, -163, -154, -145, -136, -127, -118, -109, -100, -91, -82, -73, -64, -55, -46, -37, -28, -19 in the figure belong to a same distributed RU. The subcarriers indexed as -243, -234, -225, -216, -207, -198, -189, -180, -171, -162, -153, -144, -135, -126, -117, -108, -99, -90, -81, -72, -63, -54, -45, -36, -27, -18 belong to a same distributed RU. The subcarriers indexed as -242, -233, -224, -215, -206, -197, -188, -179, -170, -161, -152, -143, -134, -125, -116, -107, -98, -89, -80, -71, -62, -53, -44, -35, -26, -17 belong to a same distributed RU. The subcarriers indexed as -241, -232, -223, -214, -205, -196, -187, -178, -169, -160, -151, -142, -133, -124, -115, -106, -97, -88, -79, -70, -61, -52, -43, -34, -25, -16 belong to a same distributed RU. The subcarriers indexed as -240, -231, -222, -213, -204, -195, -186, -177, -168, -159, -150, -141, -132, -123, -114, -105, -96, -87, -78, -69, -60, -51, -42, -33, -24, -15 belong to a same distributed RU. The subcarriers indexed as -239, -230, -221, -212, -203, -194, -185, -176, -167, -158, -149, -140, -131, -122, -113, -104, -95, -86, -77, -68, -59, -50, -41, -32, -23, -14 belong to a same distributed RU. The subcarriers indexed as -238, -229, -220, -211, -202, -193, -184, -175, -166, -157, -148, -139, -130, -121, -112, -103, -94, -85, -76, -67, -58, -49, -40, -31, -22, -13 belong to a same distributed RU. The subcarriers indexed as -237, -228, -219, -210, -201, -192, -183, -174, -165, -156, -147, -138, -129, -120, -111, -102, -93, -84, -75, -66, -57, -48, -39, -30, -21, -12 belong to a same distributed RU. The subcarriers indexed as -236, -227, -218, -209, -200, -191, -182, -173, -164, -155, -146, -137, -128, -119, -110, -101, -92, -83, -74, -65, -56, -47, -38, -29, -20, -11 belong to a same distributed RU. The subcarriers indexed as 11, 20, 29, 38, 47, 56, 65, 74, 83, 92, 101, 110, 119, 128, 137, 146, 155, 164, 173, 182, 191, 200, 209, 218, 227, 236 belong to a same distributed RU. The subcarriers indexed as 12, 21, 30, 39, 48, 57, 66, 75, 84, 93, 102, 111, 120, 129, 138, 147, 156, 165, 174, 183, 192, 201, 210, 219, 228, 237 belong to a same distributed RU. The subcarriers indexed as 13, 22, 31, 40, 49, 58, 67, 76, 85, 94, 103, 112, 121, 130, 139, 148, 157, 166, 175, 184, 193, 202, 211, 220, 229, 238 belong to a same distributed RU. The subcarriers indexed as 14, 23, 32, 41, 50, 59, 68, 77, 86, 95, 104, 113, 122, 131, 140, 149, 158, 167, 176, 185, 194, 203, 212, 221, 230, 239 belong to a same distributed RU. The subcarriers indexed as 15, 24, 33, 42, 51, 60, 69, 78, 87, 96, 105, 114, 123, 132, 141, 150, 159, 168, 177, 186, 195, 204, 213, 222, 231, 240 belong to a same distributed RU. The subcarriers indexed as 16, 25, 34, 43, 52, 61, 70, 79, 88, 97, 106, 115, 124, 133, 142, 151, 160, 169, 178, 187, 196, 205, 214, 223, 232, 241 belong to a same distributed RU. The subcarriers indexed as 17, 26, 35, 44, 53, 62, 71, 80, 89, 98, 107, 116, 125, 134, 143, 152, 161, 170, 179, 188, 197, 206, 215, 224, 233, 242 belong to a same distributed RU. The subcarriers indexed as 18, 27, 36, 45, 54, 63, 72, 81, 90, 99, 108, 117, 126, 135, 144, 153, 162, 171, 180, 189, 198, 207, 216, 225, 234, 243 belong to a same distributed RU. The subcarriers indexed as 19, 28, 37, 46, 55, 64, 73, 82, 91, 100, 109, 118, 127, 136, 145, 154, 163, 172, 181, 190, 199, 208, 217, 226, 235, 244 belong to a same distributed RU. As can be seen from the figure, except for the null subcarriers, for each distributed RU, every two subcarriers belonging to a same distributed RU are spaced by 8 subcarriers belonging to other distributed RUs.

As can be seen from the figure, the frequency domain positions of the subcarriers in each distributed RU span half of 40MHz, i.e., 20MHz. Using the representation method shown earlier, the index of each distributed RU can be represented as: dRU1: [-244:9:-19], dRU2: [-243:9:-18], dRU3: [-242:9:-17], dRU4: [-241:9:-16], dRU5: [-240:9:-15], dRU6: [-239:9:-14], dRU7: [-238:9:-13], dRU8: [-237:9:-12], dRU9: [-236:9:-11], dRU10: [11:9:236], dRU11: [12:9:237], dRU12: [13:9:238], dRU13: [14:9:239], dRU14: [15:9:240], dRU15: [16:9:241], dRU16: [17:9:242], dRU17: [18:9:243], dRU18: [19:9:244].

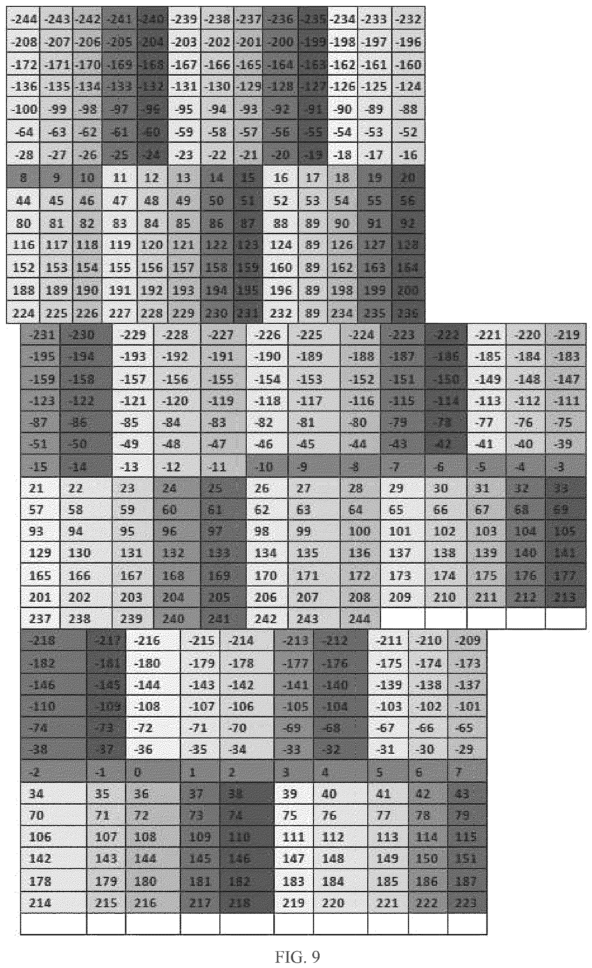

Referring to Fig. 9, Fig. 9 is a schematic distribution diagram of a fourth type of distributed RUs provided in an example of the present disclosure.

Fig. 9 illustrates the distribution of 18 distributed RUs when the data transmission bandwidth is 40MHz, each distributed RU includes 26 subcarriers, and the first preset number is 17.

Each rectangle in the figure represents one subcarrier, and the number on each subcarrier represents its index. There are a total of 489 subcarriers ranging from -244 to 244. Due to the image size, the complete image is divided into three parts for display in the figure. The actual arrangement order of the three parts from top to bottom in Fig. 9 should be that the first image is located on the left of the second image, and the second image is located on the left of the third image.

The vertical axis represents the frequency domain, while the horizontal axis represents the time domain. The subcarriers indexed as -10 to 10 are Null subcarriers, which in this example belong to the preset subcarriers that do not participate in the distributed RU allocation. Except for such subcarriers, the subcarriers indexed as -244, -266, -208, -190, -172, -154, -136, -118, -100, -82, -64, -46, -28, 11, 29, 47, 65, 83, 101, 119, 137, 155, 173, 191, 209, 227 in the figure belong to a same distributed RU. The subcarriers indexed as -243, -265, -207, -189, -171, -153, -135, -117, -99, -81, -63, -45, -27, 12, 30, 48, 66, 84, 102, 120, 138, 156, 174, 192, 210, 228 belong to a same distributed RU. The subcarriers indexed as -242, -264, -206, -188, -170, -152, -134, -116, -98, -80, -62, -44, -26, 13, 31, 49, 67, 85, 103, 121, 139, 157, 175, 193, 211, 229 belong to a same distributed RU. The subcarriers indexed as -241, -263, -205, -187, -169, -151, -133, -115, -97, -79, -61, -43, -25, 14, 32, 50, 68, 86, 104, 122, 140, 158, 176, 194, 212, 230 belong to a same distributed RU. The subcarriers indexed as -240, -262, -204, -186, -168, -150, -132, -114, -96, -78, -60, -42, -24, 15, 33, 51, 69, 87, 105, 123, 141, 159, 177, 195, 213, 231 belong to a same distributed RU. The subcarriers indexed as -239, -261, -203, -185, -167, -149, -131, -113, -95, -77, -59, -41, -23, 16, 34, 52, 70, 88, 106, 124, 142, 160, 178, 196, 214, 232 belong to a same distributed RU. The subcarriers indexed as -238, -260, -202, -184, -166, -148, -130, -112, -94, -76, -58, -40, -22, 17, 35, 53, 71, 89, 107, 125, 143, 161, 179, 197, 215, 233 belong to a same distributed RU. The subcarriers indexed as -237, -259, -201, -183, -165, -147, -129, -111, -93, -75, -57, -39, -21, 18, 36, 54, 72, 90, 108, 126, 144, 162, 180, 198, 216, 234 belong to a same distributed RU. The subcarriers indexed as -236, -258, -200, -182, -164, -146, -128, -110, -92, -74, -56, -38, -20, 19, 37, 55, 73, 91, 109, 127, 145, 163, 181, 199, 217, 235 belong to a same distributed RU. The subcarriers indexed as -235, -257, -199, -181, -163, -145, -127, -109, -91, -73, -55, -37, -19, 20, 38, 56, 74, 92, 110, 128, 146, 164, 182, 200, 218, 236 belong to a same distributed RU. The subcarriers indexed as -234, -256, -198, -180, -162, -144, -126, -108, -90, -72, -54, -36, -18, 21, 39, 57, 75, 93, 111, 129, 147, 165, 183, 201, 219, 237 belong to a same distributed RU. The subcarriers indexed as -233, -255, -197, -179, -161, -143, -125, -107, -89, -71, -53, -35, -17, 22, 40, 58, 76, 94, 112, 130, 148, 166, 184, 202, 220, 238 belong to a same distributed RU. The subcarriers indexed as -232, -254, -196, -178, -160, -142, -124, -106, -88, -70, -52, -34, -16, 23, 41, 59, 77, 95, 113, 131, 149, 167, 185, 203, 221, 239 belong to a same distributed RU. The subcarriers indexed as -231, -253, -195, -177, -159, -141, -123, -105, -87, -69, -51, -33, -15, 24, 42, 60, 78, 96, 114, 132, 150, 168, 186, 204, 222, 240 belong to a same distributed RU. The subcarriers indexed as -230, -252, -194, -176, -158, -140, -122, -104, -86, -68, -50, -32, -14, 25, 43, 61, 79, 97, 115, 133, 151, 169, 187, 205, 223, 241 belong to a same distributed RU. The subcarriers indexed as -229, -251, -193, -175, -157, -139, -121, -103, -85, -67, -49, -31, -13, 26, 44, 62, 80, 98, 116, 134, 152, 170, 188, 206, 224, 242 belong to a same distributed RU. The subcarriers indexed as -228, -250, -192, -174, -156, -138, -120, -102, -84, -66, -48, -30, -12, 27, 45, 63, 81, 99, 117, 135, 153, 171, 189, 207, 225, 243 belong to a same distributed RU. The subcarriers indexed as -227, -249, -191, -173, -155, -137, -119, -101, -83, -65, -47, -29, -11, 28, 46, 64, 82, 100, 118, 136, 154, 172, 190, 208, 226, 244 belong to a same distributed RU. As can be seen from the figure, except for the subcarriers indexed as -10 to 10, for each distributed RU, every two subcarriers belonging to a same distributed RU are spaced by 17 subcarriers belonging to other distributed RUs.

As can be seen from the figure, the frequency domain positions of the subcarriers in each distributed RU span 40MHz. Using the representation method shown earlier, the number of each distributed RU can be represented as: dRU1: [-244:18:227], dRU2: [-243:18:228], dRU3: [-242:18:229], dRU4: [-241:18:230], dRU5: [-240:18:231], dRU6: [-239:18:232], dRU7: [-238:18:233], dRU8: [-237:18:234], dRU9: [-236:18:235], dRU10 [-235:18:236], dRU11 [-234:18:237], dRU12 [-233:18:238], dRU13: [-232:18:239], dRU14:[-231:18:240], dRU15: [-230:18:241], dRU16: [-229:18:242], dRU17: [-228:18:243], dRU18: [-227:18:244].

Furthermore, an example of the present disclosure provide a grouping and indication method for dRUs with a bandwidth of 40MHz.

Table 3 is an indication table of a second type of distributed RUs provided in an example of the present disclosure.

**Table 3**

| dRU Type | dRU index and subcarrier range | | | | |
|---|---|---|---|---|---|
| 26-tone dRU type 1 (i.e., the first value is 18) 40MHz | dRU1 [-244:18:2 27] | dRU2 [-243:18:2 28] | dRU3 [-242:18:2 29] | dRU4 [-241:18:2 30] | dRU5 [-240:18:2 31] |
| | dRU6 [-239:18:2 32] | dRU7 [-238:18:2 33] | dRU8 [-237:18:2 34] | dRU9 [-236:18:2 35] | |
| | dRU10 [-235:18:2 36] | dRU11 [-234:18:2 37] | dRU12 [-233:18:2 38] | dRU13 [-232:18:2 39] | dRU14 [-231:18:2 40] |
| | dRU15 [-230:18:2 41] | dRU16 [-229:18:2 42] | dRU17 [-228:18:2 43] | dRU18 [-227:18:2 44] | |
| 26-tone dRU type 2 (i.e., the first value is 9) 40MHz | dRU1 [-244:9:-1 9] | dRU2 [-243:9:-1 8] | dRU3 [-242:9:-1 7] | dRU4 [-241:9:-1 6] | dRU5 [-240:9:-1 5] |
| | dRU6 [-239:9:-1 4] | dRU7 [-238:9:-1 3] | dRU8 [-237:9:-1 2] | dRU9 [-236:9:-1 1] | |
| | dRU10 [11:9:236] | dRU11 [12:9:237] | dRU12 [13:9:238] | dRU13 [14:9:239] | dRU14 [15:9:240] |
| | dRU15 [16:9:241] | dRU16 [17:9:242] | dRU17 [18:9:243] | dRU18 [19:9:244] | |

Table 3 is established based on the allocation methods shown in Figs. 8 and 9 mentioned earlier. It should be noted that this example does not limit the first preset number, and does not limit the number of other subcarriers spacing sequentially adjacent subcarriers included in a same distributed RU to be fixed. Table 3 represents just one form of allocation.

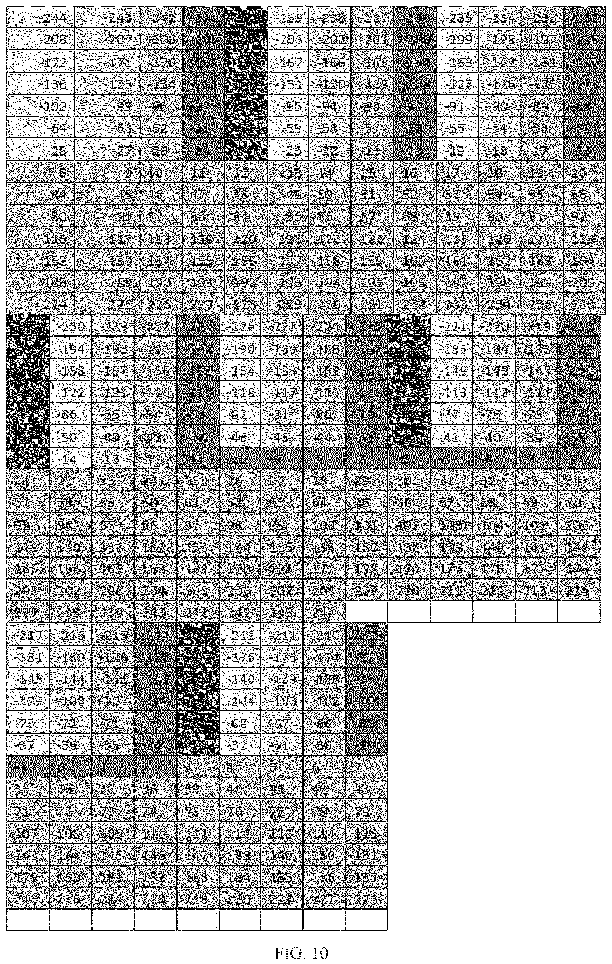

In a further allocation method, some of the subcarriers in the transmission bandwidth belong to distributed RUs, and some others belong to normal RUs. Referring to Fig. 10, Fig. 10 illustrates a schematic distribution diagram of a second type of Mix RUs provided in an example of the present disclosure.

Fig. 10 shows the distribution of 9 distributed RUs and 1 normal RU when the data transmission bandwidth is 40MHz, the RU corresponding to the terminal is a Mix RU, each distributed RU includes 26 subcarriers, and the first preset number is 8.

Each rectangle in the figure represents one subcarrier, and the number on each subcarrier represents its index. There are a total of 489 subcarriers ranging from -244 to 244. Due to the size of the image, a complete image is divided into three parts for display in the figure. The actual arrangement order of the three parts from top to bottom in Fig. 10 should be that the first image is located on the left of the second image, and the second image is located on the left of the third image.

The vertical axis represents the frequency domain, and the horizontal axis represents the time domain. The subcarriers indexed as -10 to 2 are Null subcarriers, and the subcarriers indexed as 3 to 244 belong to normal RUs, which in this example belong to the preset subcarriers that do not participate in the distributed RU allocation. The subcarriers indexed as -244 to -11 are divided as distributed RUs. Specifically, the subcarriers indexed as -244, -235, -226, -217, -208, -199, -190, -181, -172, -163, -154, -145, -136, -127, -118, -109, -100, -91, -82, -73, -64, -55, -46, -37, -28, -19 in the figure belong to a same distributed RU. The subcarriers indexed as -243, -234, -225, -216, -207, -198, -189, -180, -171, -162, -153, -144, -135, -126, -117, -108, -99, -90, -81, -72, -63, -54, -45, -36, -27, -18 belong to a same distributed RU. The subcarriers indexed as -242, -233, -224, -215, -206, -197, -188, -179, -170, -161, -152, -143, -134, -125, -116, -107, -98, -89, -80, -71, -62, -53, -44, -35, -26, -17 belong to a same distributed RU. The subcarriers indexed as -241, -232, -223, -214, -205, -196, -187, -178, -169, -160, -151, -142, -133, -124, -115, -106, -97, -88, -79, -70, -61, -52, -43, -34, -25, -16 belong to a same distributed RU. The subcarriers indexed as -240, -231, -222, -213, -204, -195, -186, -177, -168, -159, -150, -141, -132, -123, -114, -105, -96, -87, -78, -69, -60, -51, -42, -33, -24, -15 belong to a same distributed RU. The subcarriers indexed as -239, -230, -221, -212, -203, -194, -185, -176, -167, -158, -149, -140, -131, -122, -113, -104, -95, -86, -77, -68, -59, -50, -41, -32, -23, -14 belong to a same distributed RU. The subcarriers indexed as -238, -229, -220, -211, -202, -193, -184, -175, -166, -157, -148, -139, -130, -121, -112, -103, -94, -85, -76, -67, -58, -49, -40, -31, -22, -13 belong to a same distributed RU. The subcarriers indexed as -237, -228, -219, -210, -201, -192, -183, -174, -165, -156, -147, -138, -129, -120, -111, -102, -93, -84, -75, -66, -57, -48, -39, -30, -21, -12 belong to a same distributed RU. The subcarriers indexed as -236, -227, -218, -209, -200, -191, -182, -173, -164, -155, -146, -137, -128, -119, -110, -101, -92, -83, -74, -65, -56, -47, -38, -29, -20, -11 belong to a same distributed RU.

As can be seen from the figure, the frequency domain positions of the subcarriers in each distributed RU span half of 40MHz, i.e., 40MHz. The representation method for each distributed RU can refer to the description in Fig. 8 mentioned earlier, and will not be repeated here. The positions of the subcarriers included in each normal RU can be represented by the indexes of the first and last subcarriers included in that normal RU. The index of the normal RU (NRU10) in the figure can be represented as [3:244].

In a further example of the present disclosure, the index of a normal RU can be represented by the index of the first subcarrier and the number of subcarriers included. For example, NRU10 can be represented as [3:242].

Additionally, when a NRU includes 26 subcarriers, except for those belonging to distributed RUs and Null subcarriers, the remaining subcarriers can be divided into 9 groups of NRUs. The subcarriers indexed as -10 to 10 are Null subcarriers. When the index of a NRU is represented by the indexes of the first and last subcarriers included in the NRU, NRU10 can be represented as [11:36], NRU11 can be represented as [37:62], NRU12 can be represented as [63:88], NRU13 can be represented as [89:114], NRU14 can be represented as [115:140], NRU15 can be represented as [141:166], NRU16 can be represented as [167:192], NRU17 can be represented as [193:218], and NRU18 can be represented as [219:244].

When a NRU includes 52 subcarriers, except for those belonging to distributed RUs and Null subcarriers, the remaining subcarriers can be divided into 4 groups of NRUs. The subcarriers indexed as -10 to 36 are Null subcarriers. When the index of a NRU is represented by the indexes of the first and last subcarriers included in the NRU, NRU10 can be represented as [37:88], NRU11 can be represented as [89:140], NRU12 can be represented as [141:192], and NRU13 can be represented as [193:244].

When a NRU includes 106 subcarriers, except for those belonging to distributed RUs and Null subcarriers, the remaining subcarriers can be divided into 2 groups of NRUs. The subcarriers indexed as -10 to 32 are Null subcarriers. NRU10 can be represented as [33:138], and NRU11 can be represented as [139:244].

Based on this, referring to Table 4, Table 4 is an indication table of a second type of RUs provided in an example of the present disclosure.

**Table 4**

| RU Type | RU index and subcarrier range | | | | |
|---|---|---|---|---|---|
| 26-tone dRU 26-tone NRU type 2 (i.e., the first value is 9) 40MHz | dRU1 [-244:9:-19] | dRU2 [-243:9:-18] | dRU3 [-242:9:-17] | dRU4 [-241:9:-16] | dRU5 [-240:9:-15] |
| | dRU6 [-239:9:-14] | dRU7 [-238:9:-13] | dRU8 [-237:9:-12] | dRU9 [-236:9:-11] | |
| | NRU10 [11:36] | NRU11 [37:62] | NRU12 [63:88] | NRU13 [89:114] | NRU14 [115:140] |
| | NRU15 [141:166] | NRU16 [167:192] | NRU17 [193:218] | NRU18 [219:244] | |
| 26-tone dRU 52-tone NRU type 2 (i.e., the first value is 9) 40MHz | dRU1 [-244:9:-19] | dRU2 [-243:9:-18] | dRU3 [-242:9:-17] | dRU4 [-241:9:-16] | dRU5 [-240:9:-15] |
| | dRU6 [-239:9:-14] | dRU7 [-238:9:-13] | dRU8 [-237:9:-12] | dRU9 [-236:9:-11] | |
| | NRU10 [37:88] | NRU11 [89:140] | NRU12 [141:192] | NRU13 [193:244] | |
| 26-tone dRU 106-tone NRU type 2 (i.e., the first value is 9) 40MHz | dRU1 [-244:9:-19] | dRU2 [-243:9:-18] | dRU3 [-242:9:-17] | dRU4 [-241:9:-16] | dRU5 [-240:9:-15] |
| | dRU6 [-239:9:-14] | dRU7 [-238:9:-13] | dRU8 [-237:9:-12] | dRU9 [-236:9:-11] | |
| | NRU10 [33:138] | NRU11 [139:244] | | | |
| 26-tone dRU 242-tone NRU type 2 (i.e., the first value is 9) 40MHz | dRU1 [-244:9:-19] | dRU2 [-243:9:-18] | dRU3 [-242:9:-17] | dRU4 [-241:9:-16] | dRU5 [-240:9:-15] |
| | dRU6 [-239:9:-14] | dRU7 [-238:9:-13] | dRU8 [-237:9:-12] | dRU9 [-236:9:-11] | |
| | NRU10 [3:242] | | | | |

The following provides a detailed description of MRU:
Each MRU can include multiple distributed RUs that are divided in the aforementioned method.

In one example of the present disclosure, the number of distributed RUs included in each MRU is the same, but the distributed RUs included in different MRUs are different. A third preset number of distributed RUs belonging to other MRUs are interposed between every two distributed RUs belonging to a same MRU. For example, if the third preset number is 4, the first distributed RU and the sixth distributed RU are divided into one MRU, the second distributed RU and the seventh distributed RU are divided into one MRU, and so on.

Based on the above division method, a MRU can include 2 distributed RUs, 3 distributed RUs, 4 distributed RUs or any other number of distributed RUs that can be set according to requirements, which is not limited in this example.

In one example of the present disclosure, the index of the aforementioned MRU is represented by the indexes of the distributed RUs included.

On this basis, referring to Table 5, Table 5 is a MRU resource grouping table in an example of the present disclosure.

**Table 5**

| MRU Type (20MHz) | MRU index | MRU combination |
|---|---|---|
| 26-tone+ 26-tone (the first value is 9) 40MHz | MRU1 | dRU1+dRU6 |
| | MRU2 | dRU2+dRU7 |
| | MRU3 | dRU3+dRU8 |
| | MRU4 | dRU4+dRU9 |
| 26-tone+ 26-tone (the first value is 4) 20MHz | MRU1 | dRU1+dRU6 |
| | MRU2 | dRU2+dRU7 |
| | MRU3 | dRU3+dRU8 |
| | MRU4 | dRU4+dRU9 |
| | MRU5 | dRU1+dRU2 |
| | MRU6 | dRU3+dRU4 |
| | MRU7 | dRU4+dRU5 |
| | MRU8 | dRU7+dRU8 |
| 26-tone+ 26-tone+26tone (the first value is 9) 40MHz | MRU1 | dRU1+dRU4+dRU7 |
| | MRU2 | dRU2+dRU5+dRU8 |
| | MRU3 | dRU3+dRU6+dRU9 |
| 26-tone+ 26-tone+26tone (the first value is 4) 20MHz | MRU1 | dRU1+dRU4+dRU7 |
| | MRU2 | dRU2+dRU5+dRU8 |
| | MRU3 | dRU3+dRU6+dRU9 |
| 26tone+ 26tone+26tone+26tone (the first value is 9) 40MHz | MRU1 | dRU1+dRU3+dRU6+dRU8 |
| | MRU2 | dRU2+dRU4+dRU7+dRU9 |
| 26tone+ 26tone+26tone+26tone (the first value is 4) 20MHz | MRU1 | dRU1+dRU3+dRU6+dRU8 |
| | MRU2 | dRU2+dRU4+dRU7+dRU9 |

26-tone represents a distributed RU including 26 subcarriers, 26-tone+ 26-tone represents that the MRU includes 2 distributed RUs, 26-tone+ 26-tone+26tone represents that the MRU includes 3 distributed RUs, and 26tone+ 26tone+26tone+26tone represents that the MRU includes 4 distributed RUs. As stated in Table 2, in the case of different values of the first preset number, the subcarriers included in dRU1-dRU9 can be referred to the previously mentioned description of Table 1, and will not be repeated here.

The indexes of subcarriers included in each dRU in the case of different transmission bandwidths and different values of the first preset number can be referred to the previously mentioned descriptions of Table 1 and Table 3, and will not be repeated here.

The following provides a detailed description of Mix RU:
The Mix RU corresponding to some terminals is a distributed RU, and the Mix RU corresponding to the other terminals is a normal RU. Therefore, distributed RUs and normal RUs can be divided into different Mix RUs.

In the case of a transmission bandwidth of 20MHz, the distribution of dRUs and NRUs can be referred to the previously mentioned description of Table 2. Based on this, dRUs and NRUs are divided into different Mix RUs, and the results can be referred to the description of Table 6 below.

Referring to Table 6, Table 6 is a division method table of a first type of Mix RUs provided in an example of the present disclosure.

**Table 6**

| Mix RU Type | Mix RU index | Mix RU combination |
|---|---|---|
| 26-tone NRU+26-tone dRU (the first value is 4) | MixRU1 | dRU1 |
| | MixRU2 | dRU2 |
| | MixRU3 | dRU3 |
| | MixRU4 | dRU4 |
| | MixRU5 | NRU5 |
| | MixRU6 | NRU6 |
| | MixRU7 | NRU7 |
| | MixRU8 | NRU8 |
| 52-toneNRU+26-tonedRU (the first value is 4) | MixRU1 | dRU1 |
| | MixRU2 | dRU2 |
| | MixRU3 | dRU3 |
| | MixRU4 | dRU4 |
| | MixRU5 | NRU5 |
| | MixRU6 | NRU6 |

In the case of a transmission bandwidth of 40MHz, the distribution of dRUs and NRUs can be referred to the previously mentioned description of Table 4. Based on this, dRUs and NRUs are divided into different Mix RUs, and the results can be referred to the description of Table 7 below. In Table 7, for each division method, the number of dRUs that participate in the Mix RU division in Table 7 is 4. When a NRU includes 26 subcarriers or 52 subcarriers, the number of NRUs that participate in the Mix RU division is 4, and When a NRU includes 106 subcarriers, the number of NRUs that participate in the Mix RU division is 2.

**It** should be noted that the example shown in Table 7 is just one scenario. In the examples of the present disclosure, all distributed RUs and normal RUs can participate in the Mix RU division. During an actual division process, some or all distributed RUs and some or all normal RUs can be selected to perform the Mix RU division as needed. The present disclosure does not limit the number of distributed RUs and normal RUs that participate in the Mix RU division, and does not limit the indexes of distributed RUs and normal RUs that actually participate in the Mix RU division, as long as both distributed RUs and normal RUs participate in the Mix RU division.

Referring to Table 7, Table 7 is a division method table of a first type of Mix RUs provided in an example of the present disclosure.

**Table 7**

| Mix RU Type | Mix RU index | Mix RU combination |
|---|---|---|
| 26-tone NRU+ 26-tone dRU (the first value is 9) | MixRU1 | dRU1 |
| | MixRU2 | dRU2 |
| | MixRU3 | dRU3 |
| | MixRU4 | dRU4 |
| | MixRU5 | NRU10 |
| | MixRU6 | NRU11 |
| | MixRU7 | NRU12 |
| | MixRU8 | NRU13 |
| 52-tone NRU+26-tone dRU (the first value is 9) | MixRU1 | dRU1 |
| | MixRU2 | dRU2 |
| | MixRU3 | dRU3 |
| | MixRU4 | dRU4 |
| | MixRU5 | NRU10 |
| | MixRU6 | NRU11 |
| | MixRU7 | NRU12 |
| | MixRU8 | NRU13 |
| 106-toneNRU+26-tone dRU (the first value is 9) | MixRU1 | dRU1 |
| | MixRU2 | dRU2 |
| | MixRU3 | dRU3 |
| | MixRU4 | dRU4 |
| | MixRU5 | NRU10 |
| | MixRU6 | NRU11 |

The following provides a description of the positions of the Null subcarriers.

In one example of the present disclosure, the aforementioned Null subcarriers are located at the middle position of all subcarriers in the transmission bandwidth, and these Null subcarriers are DC subcarriers.

Specifically, the Null subcarriers are arranged continuously, and the subcarrier of the Null subcarriers at the center is the subcarrier of all subcarriers at the center in the transmission bandwidth. In this case, all Null subcarriers are used as DC subcarriers. The number of the Null subcarriers can be placed according to requirements, and is not limited in the examples of the present disclosure.

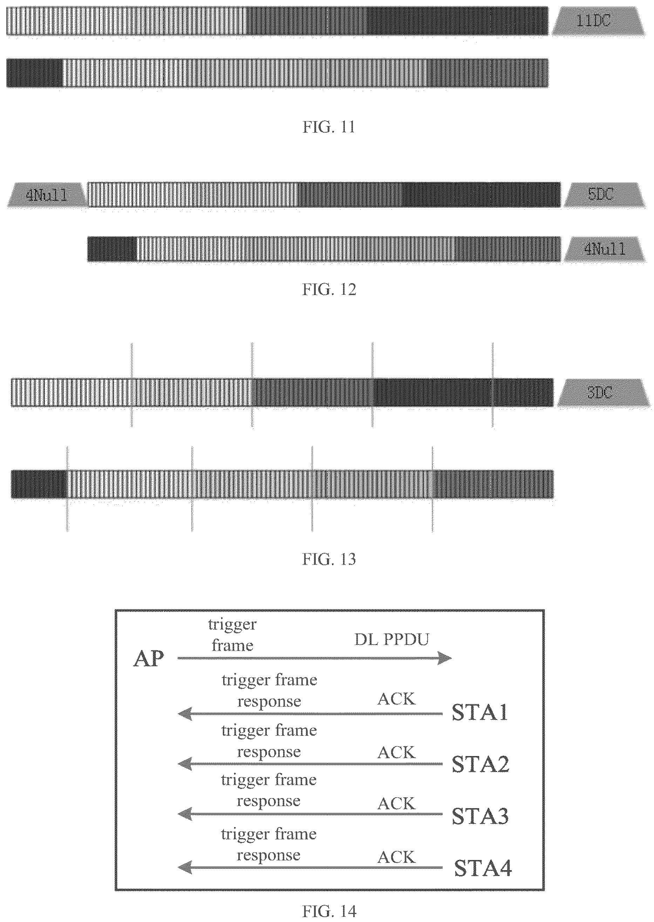

In this case, referring to Fig. 11, Fig. 11 is a schematic position diagram of a first type of Null subcarriers provided in an example of the present disclosure.

Due to the limitation of image size, the subcarriers in the figure are divided into two rows for display. As can be seen from the figure, the Null subcarriers are 11 DC subcarriers located at the middle position of all subcarriers.

In one example, when the data transmission bandwidth is 20MHz, there are 245 subcarriers, including 11 Null subcarriers that all serve as DC subcarriers. The 11 DC subcarriers are located at the middle position of the 245 subcarriers, and the remaining non-Null subcarriers are positioned on both sides of the DC subcarriers, with 117 non-Null subcarriers on each side.

In a further example, when the data transmission bandwidth is 40MHz, there are 489 subcarriers, including 21 Null subcarriers that all serve as DC subcarriers. The 21 DC subcarriers are located at the middle position of the 489 subcarriers, and the other non-Null subcarriers are positioned on both sides of the DC subcarriers, with 234 non-Null subcarriers on each side.

In a further example of the present disclosure, the Null subcarriers exist at the frontmost position of, at a backmost position of, and at a middle position of all subcarriers in the transmission bandwidth, and the Null subcarriers located at the middle position are DC subcarriers.

Specifically, the preset Null subcarriers can be divided into three parts, with each part having the same or different amounts of subcarriers. Alternatively, the number of Null subcarriers at the frontmost position can be the same as that at the backmost position, but different from that at the middle position. The number of Null subcarriers can be configured according to requirements, and is not limited in the examples of the present disclosure.

The Null subcarriers at the frontmost and backmost positions can provide out-of-band interference protection.

Referring to Fig. 12, Fig. 12 is a schematic position diagram of a second type of Null subcarriers provided in an example of the present disclosure.

Due to the limitation of image size, the subcarriers are displayed in two rows in the figure. As can be seen from the figure, the Null subcarriers at the middle position in the figure are DC subcarriers, the remaining Null subcarriers are located at the frontmost and backmost positions, and the rest are non-Null subcarriers.

In one example, when the data transmission bandwidth is 20MHz, there are 245 subcarriers, including 11 Null subcarriers divided into 3 parts. 5 Null subcarriers as DC subcarriers are located at the middle position. The remaining 8 Null subcarriers are evenly divided into 2 parts, with 4 Null subcarriers at the frontmost position and 4 Null subcarriers at the backmost position. The other non-Null subcarriers are located on both sides of the DC subcarriers, with 117 non-Null subcarriers on each side.

In another example, when the data transmission bandwidth is 40MHz, there are 489 subcarriers, including 21 Null subcarriers divided into 3 parts. 5 Null subcarriers as DC subcarriers are located at the middle position. The remaining 16 Null subcarriers are evenly divided into 2 parts, which are located at the frontmost and backmost positions, respectively. The other non-Null subcarriers are located on both sides of the DC subcarriers, with 234 non-Null subcarriers on each side.

In a further example of the present disclosure, a second preset number of Null subcarriers exist at the middle position of all subcarriers in the transmission bandwidth. Except for the second preset number of Null subcarriers located at the middle position, other Null subcarriers are located at any position of all subcarriers. The Null subcarriers located at the middle position are DC subcarriers.

Specifically, the second preset number of Null subcarriers are placed at the middle position of all subcarriers. The remaining Null subcarriers can be randomly allocated to any position of all subcarriers, or one or more Null subcarriers are placed every fifth preset number of non-Null subcarriers. Except for the second preset number of subcarriers located at the middle position, the positions of the other Null subcarriers can be adjacent or non-adjacent, and this example of the disclosure does not impose restrictions on this as well as the specific value of the second preset number.

Referring to Fig. 13, Fig. 13 is a schematic position diagram of a third type of Null subcarriers provided in an example of the present disclosure.

Due to the limitation of image size, the subcarriers are divided into two rows for display in the figure. As can be seen from the figure, the Null subcarriers located at the middle position are 3 DC subcarriers, and the remaining subcarriers are non-Null subcarriers. The vertical lines represent the other Null subcarriers besides the DC subcarriers, which are located between the non-Null subcarriers.

In one example, when the data transmission bandwidth is 20MHz, there are 245 subcarriers, including 11 Null subcarriers. 3 Null subcarriers as DC subcarriers are located at the middle position. One of the remaining 8 Null subcarriers is inserted every 26 non-Null subcarriers.

In another example, when the data transmission bandwidth is 40MHz, there are 489 subcarriers, including 21 Null subcarriers divided into 3 parts. 5 Null subcarriers as DC subcarriers are located at the middle position. One of the remaining 16 Null subcarriers is inserted every 26 non-Null subcarriers.

Before the AP and the terminal use RUs for data transmission, the RUs need to be configured between them. To achieve this, the configuration information needs to be transmitted between them in advance. The following describes the configuration method.

In one example of the present disclosure, the above method further includes Blocks D to G, through which the terminal determines the indexes of subcarriers in the RU used during the transmission of downlink data.

Block D: sending a first trigger frame to the terminal.

The first trigger frame includes a variant user information field (Variant User Info Field), which is used to carry a first parameter, a second parameter and a third parameter. The first parameter represents a number of a RU corresponding to the data transmission bandwidth. The second parameter represents a first value, which is the sum of the first preset number and a second value. The third parameter represents a type of RU, which is the MRU or the Mix RU.

The first trigger frame can be a Multi-User Request-To-Send (MU-RTS).

Block E: receiving a trigger frame response sent by the terminal based on the first trigger frame.

When the first trigger frame is the MU-RTS, the trigger frame response can be a Clear To Send (CTS).

Block F: sending a Downlink Physical Protocol Data Unit (DL PPDU) to the terminal, which includes a common information field (Common Info Field) that is to carry a fourth parameter representing the data transmission bandwidth, so that the terminal determines indexes of subcarriers in a RU corresponding to the terminal based on the first parameter, the second parameter, the third parameter, the fourth parameter, and pre-stored first information.

The first information represents the correspondence between the data transmission bandwidth, the index of the RU, the first value, the type of RU, and the indexes of the subcarriers.

Block G: receiving Acknowledge (ACK) information sent by the terminal.

In one example of the present disclosure, the above information exchange between the AP and the terminal is configured for information transmission by using a TB (Trigger Based) frame exchange mechanism. The MU-RTS and the CTS are TB exchange frames. The Common Info Field in the TB exchange frame is used to record the fourth parameter. The Variant User Info Field in the TB exchange frame is used to record the first parameter, the second parameter and the third parameter.

The size of the Common Info Field is 2 bits, and the Variant User Info Field can be 8 bits, with each bit indexed as B0-B7 from front to back. B0 can be used as a reserved bit. There are 128 different values for B1-B7, which can correspond to different indexes of RUs, respectively.

Alternatively, the number of bits in the Variant User Info Field can be determined based on the required number of values. For example, if the required number of different values is 41, the number of bits in the Variant User Info Field is 6.

Since the first information exists in the terminal, which represents the correspondence between the data transmission bandwidth, the index of the RU, the first value, the type of the RU, and the indexes of subcarriers. Therefore, after receiving the fourth parameter and determining the index of the RU based on the first parameter, the terminal can determine whether the RU corresponding to the terminal is the MRU or the Mix RU according to the index of the RU, the first value represented by the second parameter and the type of the RU represented by the third parameter. Then, it can determine the indexes of subcarriers in the RU based on the index of the RU and the first value represented by the second parameter.

Specifically, the first information can be represented in the form of data tables as shown in Tables 1-7 mentioned earlier. In one example of the present disclosure, after obtaining the fourth parameter, the first parameter and the third parameter, it can be determined whether the RU is the MRU or the Mix RU, and the index of the RU can be determined. Subsequently, the determined index of the RU and the first value represented by the second parameter can be used to determine the indexes of normal RUs or distributed RUs included in the RU. Based on the indexes of subcarriers included in the normal RUs or the distributed RUs, the indexes of the subcarriers included in the RU can then be obtained.

Alternatively, when the spacing between subcarriers in the RU is not fixed, the first information can be represented in the form of the data transmission bandwidth, the index of the RU, the type of the RU, and the indexes of individual subcarriers included in the distributed RUs and the normal RUs. In this case, the AP sends the fourth parameter, the first parameter and the third parameter to the terminal, which can then determine the indexes of the subcarriers in the RU based on the first information, the fourth parameter, the first parameter and the third parameter.

In addition, in order to determine the index of the RU corresponding to the fourth parameter and the first parameter, the terminal also stores third information. The third information represents a correspondence between the data transmission bandwidth, the first parameter and the index of the RU.

Referring to Table 8, Table 8 is a schematic diagram of the third information provided in an example of the present disclosure.

**Table 8**

| B1-B7 of RU Allocation subfield | UL BW subfield (UpLink Bandwidth subfield) | RU size | RU Index |
|---|---|---|---|
| 41-49 | 20MHz, 40MHz | 26-tone x2 | MRU1 to MRU9 |
| 50-58 | 20MHz, 40MHz | 26-tone x3 | MRU1 to MRU9 |
| 59-62 | 20MHz, 40MHz | 26-tone x4 | MRU1 to MRU4 |
| 63-70 | 20MHz, 40MHz | 26-tone NRU+26-tone dRU | MixRU1 to MixRU8 |
| 71-78 | 20MHz, 40MHz | 52-tone NRU+26-tone dRU | MixRU1 to MixRU8 |
| 79-84 | 20MHz, 40MHz | 106-tone NRU+26-tone dRU | MixRU1 to MixRU6, |
| 85-127 | reserved | reserved | reserved |

The meaning of Table 8 is: if the value of B1-B7 (i.e., the first parameter) is 41, and the data transmission bandwidth represented by the fourth parameter is 20MHz or 40MHz, it represents that the terminal corresponds to a MRU, which includes 2 dRUs, each including 26 subcarriers, and the corresponding index of the MRU is MRU1. If the value of B1-B7 is 42, and the data transmission bandwidth represented by the fourth parameter is 20MHz or 40MHz, it represents that the terminal corresponds to a MRU, which includes 2 dRUs, each including 26 subcarriers, and the corresponding index of the MRU is MRU2. By analogy, the index of the MRU or the Mix RU corresponding to the fourth parameter and the first parameter can be determined based on the third information.

It should be noted that the correspondence between the data transmission bandwidth, the first parameter and the index of the RU shown in Table 8 is merely an example and is not limited in the examples of the present disclosure.

In one example of the present disclosure, in order to transmit downlink data with the terminal, the AP can send a first trigger frame carrying the first parameter, the second parameter and the third parameter to the terminal.

After receiving the first trigger frame, the terminal replies to the AP with a trigger frame response to confirm receipt of the first trigger frame. Afterwards, the AP sends a DownLink Physical Protocol Data Unit (DL PPDU) carrying the fourth parameter in the dRU resource corresponding to the terminal. The terminal receives the DL PPDU in the dRU resource represented by the first trigger frame and replies with ACK information upon successful reception.

It should be noted that regardless of whether there is one or multiple terminals communicating with the AP, for each terminal, the method of sending the first parameter, the second parameter, the third parameter and the fourth parameter by the AP is the same.

Referring to Fig. 14, Fig. 14 is a schematic diagram of a multi-user transmission process for DL PPDU based on dRU resources provided in an example of the present disclosure.

In the figure, 4 STAs are included, namely STA1, STA2, STA3 and STA4, acting as terminals. The AP sends first trigger frames and DL PPDUs to the 4 STAs. Each STA feeds back trigger frame responses and ACKs to the AP.

In other words, during the above process, the AP sends the first parameter, the second parameter, the third parameter and the fourth parameter to the STAs through the first trigger frame and DL PPDU, respectively, to complete the configuration of the RU.

In a further example of this disclosure, the above method further includes the following Blocks H to K, through which the terminal determines the indexes of subcarriers in the RU used during the transmission of uplink data.

Block H: sending a second trigger frame to the terminal, wherein the second trigger frame includes a variant user information field that is to carry a fifth parameter, a sixth parameter and a seventh parameter, so that the terminal determines indexes of subcarriers in a RU corresponding to the terminal based on a current data transmission bandwidth, the fifth parameter, the sixth parameter, the seventh parameter and pre-stored first information.

The fifth parameter represents an index of a RU corresponding to the data transmission bandwidth; the sixth parameter represents a first value; the seventh parameter represents a type of the RU, which is the MRU or the Mix RU; the first information represents a correspondence between the data transmission bandwidth, the index of the RU, the first value, the type of the RU and the indexes of the subcarriers; and the first value is the sum of the first preset number and a second value. The second trigger frame can be a Multi-User Request To Send (MU-RTS).

Block I: receiving an UpLink Physical Protocol Data Unit (UL PPDU) sent by the terminal.

The common information field in the UL PPDU carries an eighth parameter, which represents the data transmission bandwidth.

Block J: determining the indexes of the subcarriers in the RU corresponding to the terminal based on the fifth parameter, the sixth parameter, the seventh parameter, the eighth parameter and the pre-stored first information mentioned above.

Specifically, the fifth parameter corresponds to the aforementioned first parameter, the sixth parameter corresponds to the aforementioned second parameter, the seventh parameter corresponds to the aforementioned third parameter, and the eighth parameter corresponds to the aforementioned fourth parameter. Descriptions of the fifth, sixth, seventh, and eighth parameters and the first information can be referred to the previous descriptions and will not be repeated here.

Block K: sending ACK information to the terminal.

In one example of the present disclosure, for uplink data transmission, the AP can send a trigger frame carrying the fifth, sixth, and seventh parameters to the terminal. After receiving the trigger frame, the terminal sends an UL PPDU carrying the eighth parameter to the AP in its corresponding dRU resource. Finally, after receiving the UL PPDU, the AP replies with the ACK to the terminal, completing the RU configuration for the terminal. Both the trigger frame and UL PPDU are TB frames.

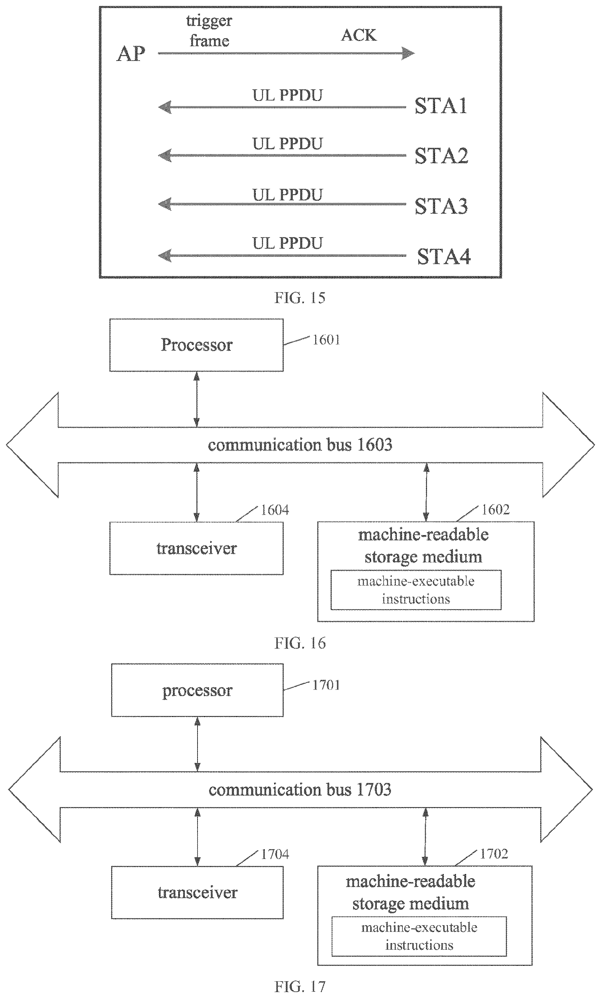

Referring to Fig. 15, Fig. 15 is a schematic diagram of a multi-user transmission process for UL PPDU based on dRU resources provided in an example of the present disclosure.

As can be seen from the figure, there are 4 STAs acting as terminals: STA1, STA2, STA3 and STA4. The AP sends a trigger frame to the STAs, the STAs feedback UL PPDUs to the AP, and then the AP sends ACKs to the STAs.

It should be noted that the inclusion of 4 STAs in the figure is merely an example. Regardless of whether there is one or multiple terminals communicating with the AP, the method of exchanging the fifth, sixth, seventh and eighth parameters between the AP and each terminal remains the same.

Since the first preset number and the data transmission bandwidth are not limited in the examples of the present disclosure, the positions of subcarriers included in the distributed RU are different when the first preset number and the data transmission bandwidth are different. Therefore, to ensure that the AP and the terminal can use a unified distributed RU for data transmission, it is necessary to unify the first preset number and the data transmission bandwidth between the AP and the terminal in advance.

To achieve this, the aforementioned method further includes the following Block L.

Block L: sending a ninth parameter and a tenth parameter to the terminal, so that the terminal determines indexes of subcarriers in each distributed RU based on the ninth parameter, the tenth parameter and pre-stored second information.

The ninth parameter represents the data transmission bandwidth, the tenth parameter represents the aforementioned first value, and the second information represents indexes of subcarriers in the distributed RU corresponding to the first value and the data transmission bandwidth.

In one example of the present disclosure, for different first values, different subcarrier allocations can be pre-determined for different data transmission bandwidths, and the allocation results can be recorded by using methods such as Tables 1-4 mentioned earlier. Both the AP and the terminal store the aforementioned second information, allowing for the unification of the subcarriers included in the RU between the two based on the pre-stored second information after transmitting the ninth and tenth parameters.

As can be seen from the above, the subcarriers included in the RU are not limited in the examples of the present disclosure, allowing for different methods of subcarrier allocation in the RU and achieving unified configuration between the AP and the terminal.

Corresponding to the aforementioned data transmission method applied to the AP, an example of the present disclosure also provides a data transmission method applied to a terminal.

The example of the present disclosure provides a data transmission method applied to a terminal, the method includes:
performing data transmission with an AP through subcarriers included in a Multi-Resource Unit (MRU) corresponding to the terminal;
wherein MRUs corresponding to different terminals are different; each MRU includes multiple distributed Resource Units, RUs, and subcarriers included in each distributed RU are spaced by other subcarriers that do not belong to the distributed RU;
   or
performing data transmission with the AP through subcarriers included in a distributed RU or a normal RU corresponding to the terminal;
wherein subcarriers included in each distributed RU are spaced by other subcarriers that do not belong to the distributed RU; in all subcarriers except for preset Null subcarriers that do not participate in data transmission, subcarriers included in each normal RU are adjacent to each other; and distributed RUs and normal RUs constitute a Mix RU that is used by all terminals accessing the AP.

As can be seen from the above, the AP is communicated with the terminal through the MRU or the Mix RU. The MRU includes multiple distributed RUs. A Mix RU corresponding to some terminals is a distributed RU, and a Mix RU corresponding to the other terminals is a normal RU. Therefore, the AP can be communicated with the terminal through the subcarriers in the distributed RU. Since the subcarriers in the distributed RU are spaced by other subcarriers that do not belong to the distributed RU, the distribution of subcarriers corresponding to the same terminal is relatively dispersed. If there is a signal attenuation in a short period of time, it will lead to a decrease in the data transmission quality of multiple subcarriers located sequentially within the time period of signal attenuation. In this case, if the subcarriers corresponding to the same terminal are continuously arranged without spacing, it will to a general decrease in the data transmission quality for the subcarriers corresponding to the terminal, thereby affecting the overall data transmission quality of the terminal. However, in the present disclosure, the distribution of subcarriers in the distributed RU is relatively dispersed, so even if there is a problem of a signal attenuation in a short period of time, it will only affect a small number of subcarriers in some distributed RUs. For the terminal communicating by using such distributed RUs, it will only affect a small number of subcarriers used by that terminal, and will not affect the overall data transmission of the terminal. Furthermore, since the subcarriers corresponding to the terminal are relatively dispersed, when the AP transmits a signal to the terminal through one subcarrier, the AP can concentrate the power of adjacent subcarriers that do not correspond to the terminal and are not used to complete data transmission together. This can increase the power of the signal, increase the coverage radius of the signal, and thus enhance the coverage radius of the AP cell. It can also enhance the PSD between the AP and the terminal and enhance the balance of uplink and downlink power.

In one example of the present disclosure, the method further includes:
in all subcarriers except for preset subcarriers that do not participate in distributed RU allocation, arranging the remaining subcarriers in order of indexes of the subcarriers;
between every two subcarriers belonging to a same distributed RU, placing a first preset number of subcarriers belonging to other distributed RUs;
wherein the preset subcarriers that do not participate in the distributed RU allocation include preset Null subcarriers that do not participate in data transmission.

In one example of the present disclosure, an index of the distributed RU is represented by an index of the first subcarrier, an index of the last subcarrier included in the distributed RU, and a first value;
wherein the first value is the sum of the first preset number and a second value.

In one example of the present disclosure, the Null subcarriers are located at a middle position of all subcarriers in a transmission bandwidth, and the Null subcarriers are Direct Current, DC subcarriers.

In one example of the present disclosure, there are Null subcarriers at a frontmost position of, at a backmost position of, and at a middle position of all subcarriers in a transmission bandwidth, respectively, and the Null subcarriers located at the middle position are DC subcarriers.

In one example of the present disclosure, a second preset number of Null subcarriers exist at a middle position of all subcarriers in a transmission bandwidth, and except for the second preset number of Null subcarriers located at the middle position, other Null subcarriers are located at any position of all subcarriers, wherein the Null subcarriers located at the middle position are DC subcarriers.

In one example of the present disclosure, an index of the normal RU is represented by an index of the first subcarrier and an index of the last subcarrier included in the normal RU.

In one example of the present disclosure, an index of the MRU is represented by indexes of the distributed RUs included.

In one example of the present disclosure, a number of the distributed RUs included in each MRU is the same, and distributed RUs included in different MRUs are different;
a third preset number of distributed RUs belonging to other MRUs are interposed between every two distributed RUs belonging to a same MRU.

In one example of the present disclosure, the method further includes:
receiving a first trigger frame sent by the AP, wherein, the first trigger frame includes a variant user information field that is to carry a first parameter, a second parameter and a third parameter, wherein the first parameter represents an index of a RU corresponding to a data transmission bandwidth, the second parameter represents a first value, which is the sum of the first preset number and a second value, and the third parameter represents a type of the RU, which is the MRU or the Mix RU;
replying to the AP with a trigger frame response;
receiving a Downlink Physical Protocol Data Unit, DL PPDU sent by the AP, wherein the DL PPDU includes a common information field that is to carry a fourth parameter representing the data transmission bandwidth;
determining indexes of the subcarriers in a RU corresponding to the terminal based on the first parameter, the second parameter, the third parameter, the fourth parameter and pre-stored first information, wherein the first information represents a correspondence between the data transmission bandwidth, the index of the RU, the first value, the type of the RU and the indexes of the subcarriers;
replying to the AP with Acknowledgment, ACK information.

In one example of the present disclosure, the method further includes:
receiving a second trigger frame sent by the AP, wherein the second trigger frame includes a variant user information field that is to carry a fifth parameter, a sixth parameter and a seventh parameter, the fifth parameter represents an index of a RU corresponding to a data transmission bandwidth, the sixth parameter represents a first value, and the seventh parameter represents a type of a RU corresponding to the terminal, which is the MRU or the Mix RU; and the first value is the sum of the first preset number and a second value;
determining indexes of subcarriers in the RU corresponding to the terminal based on the current data transmission bandwidth, the fifth parameter, the sixth parameter, the seventh parameter and pre-stored first information;
sending an Uplink Physical Protocol Data Unit, UL PPDU to the AP, wherein the UL PPDU includes a common information field that is to carry an eighth parameter, so that after receiving the eighth parameter, the AP determines the indexes of the subcarriers in the RU corresponding to the terminal based on the fifth parameter, the sixth parameter, the seventh parameter, the eighth parameter and the pre-stored first information, wherein the eighth parameter represents the data transmission bandwidth, and the first information represents the correspondence between the data transmission bandwidth, the index of the RU, the first value, the type of the RU and the indexes of the subcarriers;
receiving ACK information sent by the AP.

As can be seen from the above, the subcarriers included in the RU are not limited in the examples of the present disclosure, and different methods can be used to allocate subcarriers in the RU, achieving unified configuration between the AP and the terminal.

In one example of the present disclosure, a number of the subcarriers included in the distributed RU or the normal RU is 26, 52 or 106.

In one example of the present disclosure, when a data transmission bandwidth is 20MHz, the first preset number is 3 or 8;
when the data transmission bandwidth is 40MHz, the first preset number is 8 or 17.

Corresponding to the aforementioned data transmission method applied to an AP, an example of the present disclosure also provides an AP, as shown in Fig. 16, wherein the AP includes:
a processor 1601;
a transceiver 1604;
a machine-readable storage medium 1602, wherein the machine-readable storage medium 1602 stores machine-executable instructions that can be executed by the processor 1601; and the machine-executable instructions cause the processor 1601 to execute any one of the method blocks described in the data transmission method applied to an AP.

As shown in Fig. 16, the network device may further include a communication bus 1603. The processor 1601, the machine-readable storage medium 1602 and the transceiver 1604 are communicated with each other through the communication bus 1603, which can be a Peripheral Component Interconnect (PCI) bus, an Extended Industry Standard Architecture (EISA) bus, or the like. The communication bus 1603 can be divided into an address bus, a data bus, a control bus, etc.

The transceiver 1604 can be a wireless communication module that interacts with other devices under the control of the processor 1601.

The machine-readable storage medium 1602 can include Random Access Memory (RAM) and Non-Volatile Memory (NVM), such as at least one disk storage device. Additionally, the machine-readable storage medium 1602 can also be at least one storage device located remotely from the aforementioned processor.

The processor 1601 can be a general-purpose processor, including a Central Processing Unit (CPU), a Network Processor (NP), etc.; it can also be a Digital Signal Processor (DSP), an Application Specific Integrated Circuit (ASIC), a Field-Programmable Gate Array (FPGA), or other programmable logic devices, discrete gate or transistor logic devices, discrete hardware components.

As can be seen from the above, the AP is communicated with the terminal through the MRU or the Mix RU. The MRU includes multiple distributed RUs. A Mix RU corresponding to some terminals is a distributed RU, and a Mix RU corresponding to the other terminals is a normal RU. Therefore, the AP can be communicated with the terminal through the subcarriers in the distributed RU. Since the subcarriers in the distributed RU are spaced by other subcarriers that do not belong to the distributed RU, the distribution of subcarriers corresponding to the same terminal is relatively dispersed. If there is a signal attenuation in a short period of time, it will lead to a decrease in the data transmission quality of multiple subcarriers located sequentially within the time period of signal attenuation. In this case, if the subcarriers corresponding to the same terminal are continuously arranged without spacing, it will to a general decrease in the data transmission quality for the subcarriers corresponding to the terminal, thereby affecting the overall data transmission quality of the terminal. However, in the present disclosure, the distribution of subcarriers in the distributed RU is relatively dispersed, so even if there is a problem of a signal attenuation in a short period of time, it will only affect a small number of subcarriers in some distributed RUs. For the terminal communicating by using such distributed RUs, it will only affect a small number of subcarriers used by that terminal, and will not affect the overall data transmission of the terminal. Furthermore, since the subcarriers corresponding to the terminal are relatively dispersed, when the AP transmits a signal to the terminal through one subcarrier, the AP can concentrate the power of adjacent subcarriers that do not correspond to the terminal and are not used to complete data transmission together. This can increase the power of the signal, increase the coverage radius of the signal, and thus enhance the coverage radius of the AP cell. It can also enhance the PSD between the AP and the terminal and enhance the balance of uplink and downlink power.

Corresponding to the aforementioned data transmission method applied to a terminal, an example of the present disclosure also provides a terminal, as shown in Fig. 17, wherein the terminal includes:
a processor 1701;
a transceiver 1704;
a machine-readable storage medium 1702, wherein the machine-readable storage medium 1702 stores machine-executable instructions that can be executed by the processor 1701; and the machine-executable instructions cause the processor 1701 to execute any one of the method blocks described in the data transmission method applied to an AP.

As shown in Fig. 17, the network device may also include a communication bus 1703. The processor 1701, the machine-readable storage medium 1702 and the transceiver 1704 are communicated with each other through the communication bus 1703, which can be a Peripheral Component Interconnect (PCI) bus, an Extended Industry Standard Architecture (EISA) bus, or the like. The communication bus 1703 can be divided into an address bus, a data bus, a control bus, etc.

The transceiver 1704 can be a wireless communication module that interacts with other devices under the control of the processor 1701.

The machine-readable storage medium 1702 can include Random Access Memory (RAM) and Non-Volatile Memory (NVM), such as at least one disk storage device. In addition, the machine-readable storage medium 1702 can also be at least one storage device located remotely from the aforementioned processor.

The processor 1701 can be a general-purpose processor, including a Central Processing Unit (CPU), a Network Processor (NP), etc.; it can also be a Digital Signal Processor (DSP), an Application Specific Integrated Circuit (ASIC), a Field-Programmable Gate Array (FPGA), or other programmable logic devices, discrete gate or transistor logic devices, discrete hardware components.

As can be seen from the above, the AP is communicated with the terminal through the MRU or the Mix RU. The MRU includes multiple distributed RUs. A Mix RU corresponding to some terminals is a distributed RU, and a Mix RU corresponding to the other terminals is a normal RU. Therefore, the AP can be communicated with the terminal through the subcarriers in the distributed RU. Since the subcarriers in the distributed RU are spaced by other subcarriers that do not belong to the distributed RU, the distribution of subcarriers corresponding to the same terminal is relatively dispersed. If there is a signal attenuation in a short period of time, it will lead to a decrease in the data transmission quality of multiple subcarriers located sequentially within the time period of signal attenuation. In this case, if the subcarriers corresponding to the same terminal are continuously arranged without spacing, it will to a general decrease in the data transmission quality for the subcarriers corresponding to the terminal, thereby affecting the overall data transmission quality of the terminal. However, in the present disclosure, the distribution of subcarriers in the distributed RU is relatively dispersed, so even if there is a problem of a signal attenuation in a short period of time, it will only affect a small number of subcarriers in some distributed RUs. For the terminal communicating by using such distributed RUs, it will only affect a small number of subcarriers used by that terminal, and will not affect the overall data transmission of the terminal. Furthermore, since the subcarriers corresponding to the terminal are relatively dispersed, when the AP transmits a signal to the terminal through one subcarrier, the AP can concentrate the power of adjacent subcarriers that do not correspond to the terminal and are not used to complete data transmission together. This can increase the power of the signal, increase the coverage radius of the signal, and thus enhance the coverage radius of the AP cell. It can also enhance the PSD between the AP and the terminal and enhance the balance of uplink and downlink power.

Corresponding to the aforementioned data transmission method applied to an AP, an example of the present disclosure provides a data transmission apparatus applied to an AP.

The example of the present disclosure provides a data transmission apparatus applied to an Access Point, AP, wherein the apparatus includes:
a first data transmission module, to perform data transmission with a terminal through subcarriers included in a Multi-Resource Unit, MRU corresponding to the terminal;
wherein MRUs corresponding to different terminals are different; each MRU includes multiple distributed Resource Units, RUs, and subcarriers included in each distributed RU are spaced by other subcarriers that do not belong to the distributed RU;
   or
a second data transmission module, to perform data transmission with the terminal through subcarriers included in a distributed RU or a normal RU corresponding to the terminal;
wherein the subcarriers included in each distributed RU are spaced by other subcarriers that do not belong to the distributed RU; in all subcarriers except for preset Null subcarriers that do not participate in data transmission, subcarriers included in each normal RU are adjacent to each other; and distributed RUs and normal RUs constitute a Mix RU that is used by all terminals accessing the AP.

As can be seen from the above, the AP is communicated with the terminal through the MRU or the Mix RU. The MRU includes multiple distributed RUs. A Mix RU corresponding to some terminals is a distributed RU, and a Mix RU corresponding to the other terminals is a normal RU. Therefore, the AP can be communicated with the terminal through the subcarriers in the distributed RU. Since the subcarriers in the distributed RU are spaced by other subcarriers that do not belong to the distributed RU, the distribution of subcarriers corresponding to the same terminal is relatively dispersed. If there is a signal attenuation in a short period of time, it will lead to a decrease in the data transmission quality of multiple subcarriers located sequentially within the time period of signal attenuation. In this case, if the subcarriers corresponding to the same terminal are continuously arranged without spacing, it will to a general decrease in the data transmission quality for the subcarriers corresponding to the terminal, thereby affecting the overall data transmission quality of the terminal. However, in the present disclosure, the distribution of subcarriers in the distributed RU is relatively dispersed, so even if there is a problem of a signal attenuation in a short period of time, it will only affect a small number of subcarriers in some distributed RUs. For the terminal communicating by using such distributed RUs, it will only affect a small number of subcarriers used by that terminal, and will not affect the overall data transmission of the terminal. Furthermore, since the subcarriers corresponding to the terminal are relatively dispersed, when the AP transmits a signal to the terminal through one subcarrier, the AP can concentrate the power of adjacent subcarriers that do not correspond to the terminal and are not used to complete data transmission together. This can increase the power of the signal, increase the coverage radius of the signal, and thus enhance the coverage radius of the AP cell. It can also enhance the PSD between the AP and the terminal and enhance the balance of uplink and downlink power.

In one example of the present disclosure, the apparatus further includes:
A first subcarrier placing module, to arrange, in all subcarriers except for preset subcarriers that do not participate in distributed RU allocation, the remaining subcarriers in order of indexes of the subcarriers; and place, between every two subcarriers belonging to a same distributed RU, a first preset number of subcarriers belonging to other distributed RUs;
wherein the preset subcarriers that do not participate in the distributed RU allocation include preset Null subcarriers that do not participate in data transmission.

In one example of the present disclosure, a number of the distributed RU is represented by an index of the first subcarrier, an index of the last subcarrier included in the distributed RU, and a first value;
wherein the first value is the sum of the first preset number and a second value.

In one example of the present disclosure, the Null subcarriers are located at a middle position of all subcarriers in a transmission bandwidth, and the Null subcarriers are Direct Current, DC subcarriers.

In one example of the present disclosure, there are Null subcarriers at a frontmost position of, at a backmost position of, and at a middle position of all subcarriers in a transmission bandwidth, respectively, and the Null subcarriers located at the middle position are DC subcarriers.

In one example of the present disclosure, a second preset number of Null subcarriers exist at a middle position of all subcarriers in a transmission bandwidth, and except for the second preset number of Null subcarriers located at the middle position, other Null subcarriers are located at any position of all subcarriers, wherein the Null subcarrier located at the middle position are DC subcarriers.

In one example of the present disclosure, a number of the normal RU is represented by an index of the first subcarrier and an index of the last subcarrier included in the normal RU.

In one example of the present disclosure, an index of the MRU is represented by indexes of the distributed RUs included.

In one example of the present disclosure, a number of the distributed RUs included in each MRU is the same, and distributed RUs included in different MRUs are different;
a third preset number of distributed RUs belonging to other MRUs are interposed between every two distributed RUs belonging to a same MRU.

In one example of the present disclosure, the apparatus further includes:
a first trigger frame sending module, to send a first trigger frame to the terminal, wherein the first trigger frame includes a variant user information field that is to carry a first parameter, a second parameter and a third parameter, wherein the first parameter represents an index of a RU corresponding to a data transmission bandwidth, the second parameter represents a first value, which is the sum of the first preset number and a second value, and the third parameter represents a type of the RU, which is the MRU or the Mix RU;
a response receiving module, to receive a trigger frame response sent by the terminal based on the first trigger frame;
a DL PPDU sending module, to send a Downlink Physical Protocol Data Unit, DL PPDU to the terminal, wherein the DL PPDU includes a common information field that is to carry a fourth parameter representing the data transmission bandwidth, so that the terminal determines indexes of subcarriers in a RU corresponding to the terminal based on the first parameter, the second parameter, the third parameter, the fourth parameter and pre-stored first information; wherein the first information represents the correspondence between the data transmission bandwidth, the index of the RU, the first value, the type of the RU and the indexes of the subcarriers.
a first ACK receiving module, to receive Acknowledgment, ACK information sent by the terminal.

In an example of the present disclosure, the apparatus further includes:
a second trigger frame sending module, to send a second trigger frame to the terminal, wherein the second trigger frame includes a variant user information field that is to carry a fifth parameter, a sixth parameter and a seventh parameter, so that the terminal determines indexes of subcarriers in a RU corresponding to the terminal based on the current data transmission bandwidth, the fifth parameter, the sixth parameter, the seventh parameter and pre-stored first information; wherein the fifth parameter represents an index of a RU corresponding to the data transmission bandwidth, the sixth parameter represents a first value, and the seventh parameter represents a type of the RU, which is the MRU or the Mix RU; the first information represents the correspondence between the data transmission bandwidth, the index of the RU, the first value, the type of the RU, and the indexes of the subcarriers; and the first value is the sum of the first preset number and a second value;
an UL PPDU receiving module, to receive an Uplink Physical Protocol Data Unit, UL PPDU sent by the terminal, wherein the UL PPDU includes a common information field that is to carry an eighth parameter representing the data transmission bandwidth;
a subcarrier index determination module, to determine the indexes of subcarriers in the RU corresponding to the terminal based on the fifth parameter, the sixth parameter, the seventh parameter, the eighth parameter and the pre-stored first information;
an ACK sending module, to send ACK information to the terminal.

As can be seen from the above, the subcarriers included in the RU are not limited in the examples of the present disclosure, and different methods can be used to allocate subcarriers in the RU, achieving unified configuration between the AP and the terminal.

In an example of the present disclosure, a number of the subcarriers included in the distributed RU or the normal RU is 26, 52, or 106.

In an example of the present disclosure, when a data transmission bandwidth is 20MHz, the first preset number is 3 or 8;
when the data transmission bandwidth is 40MHz, the first preset number is 8 or 17.

Corresponding to the aforementioned data transmission method applied to a terminal, an example of the present disclosure also provides a data transmission apparatus applied to a terminal.

The example of the present disclosure provides a data transmission apparatus applied to a terminal, wherein the apparatus includes:
a third data transmission module, to perform data transmission with an AP through subcarriers included in a Multi-Resource Unit, MRU corresponding to the terminal;
wherein MRUs corresponding to different terminals are different; each MRU includes multiple distributed Resource Units, RUs, and subcarriers included in each distributed RU are spaced by other subcarriers that do not belong to the distributed RU;
   or
a fourth data transmission module, to perform data transmission with the AP through subcarriers included in a distributed RU or a normal RU corresponding to the terminal;
wherein subcarriers included in each distributed RU are spaced by other subcarriers that do not belong to the distributed RU; in all subcarriers except for preset Null subcarriers that do not participate in data transmission, subcarriers included in each normal RU are adjacent to each other; and distributed RUs and normal RUs constitute a Mix RU that is used by all terminals accessing the AP.

As can be seen from the above, the AP is communicated with the terminal through the MRU or the Mix RU. The MRU includes multiple distributed RUs. A Mix RU corresponding to some terminals is a distributed RU, and a Mix RU corresponding to the other terminals is a normal RU. Therefore, the AP can be communicated with the terminal through the subcarriers in the distributed RU. Since the subcarriers in the distributed RU are spaced by other subcarriers that do not belong to the distributed RU, the distribution of subcarriers corresponding to the same terminal is relatively dispersed. If there is a signal attenuation in a short period of time, it will lead to a decrease in the data transmission quality of multiple subcarriers located sequentially within the time period of signal attenuation. In this case, if the subcarriers corresponding to the same terminal are continuously arranged without spacing, it will to a general decrease in the data transmission quality for the subcarriers corresponding to the terminal, thereby affecting the overall data transmission quality of the terminal. However, in the present disclosure, the distribution of subcarriers in the distributed RU is relatively dispersed, so even if there is a problem of a signal attenuation in a short period of time, it will only affect a small number of subcarriers in some distributed RUs. For the terminal communicating by using such distributed RUs, it will only affect a small number of subcarriers used by that terminal, and will not affect the overall data transmission of the terminal. Furthermore, since the subcarriers corresponding to the terminal are relatively dispersed, when the AP transmits a signal to the terminal through one subcarrier, the AP can concentrate the power of adjacent subcarriers that do not correspond to the terminal and are not used to complete data transmission together. This can increase the power of the signal, increase the coverage radius of the signal, and thus enhance the coverage radius of the AP cell. It can also enhance the PSD between the AP and the terminal and enhance the balance of uplink and downlink power.

In an example of the present disclosure, the apparatus further includes:
a second subcarrier placing module, to arrange, in all subcarriers except for preset subcarriers that do not participate in distributed RU allocation, the remaining subcarriers in order of indexes of the subcarriers; place, between every two subcarriers belonging to a same distributed RU, a first preset number of subcarriers belonging to other distributed RUs;
wherein the preset subcarriers that do not participate in the distributed RU allocation include preset Null subcarriers that do not participate in data transmission.

In one example of the present disclosure, an index of the distributed RU is represented by an index of the first subcarrier, an index of the last subcarrier included in the distributed RU, and a first value;

Wherein the first value is the sum of the first preset number and a second value.

In one example of the present disclosure, the Null subcarriers are located at the middle position of all subcarriers in a transmission bandwidth, and the Null subcarriers are Direct Current, DC subcarriers.

In one example of the present disclosure, there are Null subcarriers at a frontmost position of, at a backmost position of, and at a middle position of all subcarriers in a transmission bandwidth, respectively, and the Null subcarriers located at the middle position are DC subcarriers.

In one example of the present disclosure, a second preset number of Null subcarriers exist at a middle position of all subcarriers in a transmission bandwidth, and except for the second preset number of Null subcarriers located at the middle position, other Null subcarriers are located at any position of all subcarriers, wherein the Null subcarriers located at the middle position are DC subcarriers.

In one example of the present disclosure, the index of the normal RU is represented by the index of the first subcarrier and the index of the last subcarrier included in the normal RU.

In one example of the present disclosure, a number of the MRU is represented by indexes of the distributed RUs included.

In one example of the present disclosure, a number of distributed RUs included in each MRU is the same, but distributed RUs included in different MRUs are different;
**a** third preset number of distributed RUs belonging to other MRUs are interposed between every two distributed RUs belonging to a same MRU.

In one example of the present disclosure, the apparatus further includes:
a first trigger frame receiving module, to receive a first trigger frame sent by the AP; wherein the first trigger frame includes a variant user information field that is to carry a first parameter, a second parameter and a third parameter, wherein the first parameter represents an index of a RU corresponding to a data transmission bandwidth, the second parameter represents a first value, which is the sum of the first preset number and a second value, and the third parameter represents a type of the RU which is the MRU or the Mix RU;
a response sending module, to reply to the AP with a trigger frame response;
a DL PPDU receiving module, to receive a Downlink Physical Protocol Data Unit, DL PPDU sent by the AP, wherein the DL PPDU includes a common information field that is to carry a fourth parameter representing the data transmission bandwidth;
a first index determination module, to determine indexes of the subcarriers in a RU corresponding to the terminal based on the first parameter, the second parameter, the third parameter, the fourth parameter and pre-stored first information; wherein the first information represents the correspondence between the data transmission bandwidth, the index of the RU, the first value, the type of the RU and the indexes of the subcarriers;
an ACK replying module, to reply to the AP with Acknowledgment, ACK information.

In one example of the present disclosure, the apparatus further includes:
a second trigger frame receiving module, to receive a second trigger frame sent by the AP, wherein the second trigger frame includes a variant user information field that is to carry a fifth parameter, a sixth parameter and a seventh parameter, the fifth parameter represents an index of a RU corresponding to a data transmission bandwidth, the sixth parameter represents a first value, and the seventh parameter represents a type of the RU corresponding to the terminal, which is the MRU or the Mix RU; and the first value is the sum of the first preset number and a second value;
a second index determination module, to determine indexes of subcarriers in the RU corresponding to the terminal based on the current data transmission bandwidth, the fifth parameter, the sixth parameter, the seventh parameter and pre-stored first information;
a UL PPDU sending module, to send an Uplink Physical Protocol Data Unit, UL PPDU to the AP, wherein the UL PPDU includes a common information field that is to carry an eighth parameter so that after receiving the eighth parameter, the AP determines the indexes of the subcarriers in the RU corresponding to the terminal based on the fifth parameter, the sixth parameter, the seventh parameter, the eighth parameter and the pre-stored first information, wherein the eighth parameter represents the data transmission bandwidth, and the first information represents the correspondence between the data transmission bandwidth, the index of the RU, the first value, the type of the RU and the indexes of the subcarriers.

A second ACK receiving module, to receive ACK information sent by the AP.

As can be seen from the above, the subcarriers included in the RU are not limited in the examples of the present disclosure, and different methods can be used to allocate subcarriers in the RU, achieving unified configuration between the AP and the terminal.

In one example of the present disclosure, a number of the subcarriers included in the distributed RU or the normal RU is 26, 52, or 106.

In one example of the present disclosure, when a data transmission bandwidth is 20MHz, the first preset number is 3 or 8; and
when the data transmission bandwidth is 40MHz, the first preset number is 8 or 17.

Based on the same inventive concept and the data transmission method provided in the examples of the present disclosure, a machine-readable storage medium is proposed, wherein the machine-readable storage medium stores machine-executable instructions, which, when called and executed by a processor, cause the processor to implement any one of the blocks of the data transmission method applied to an AP or a terminal.

In a further example provided in the present disclosure, a computer program product including instructions is also provided. The computer program product, when executed on a computer, causes the computer to execute any one of the blocks of the data transmission method applied to an AP or a terminal in the aforementioned examples.

In the aforementioned examples, the implementation may be fully or partially achieved through software, hardware, firmware, or any combination thereof. When implemented by using software, it may be fully or partially realized in the form of a computer program product. The computer program product includes one or more computer instructions. When the computer program instructions are loaded and executed on a computer, the processes or functions described in the examples of the present disclosure are generated fully or partially. The computer may be a general-purpose computer, a dedicated computer, a computer network, or other programmable devices. The computer instructions may be stored in a computer-readable storage medium or transmitted from one computer-readable storage medium to another, for example, the computer instructions can be transmitted from a website, computer, server, or data center to another website, computer, server, or data center via wired (e.g., coaxial cable, optical fiber, Digital Subscriber Line (DSL)) or wireless (e.g., infrared, wireless, microwave, etc.) means. The computer-readable storage medium may be any available medium accessible by a computer or a data storage device integrating one or more available media, such as a server or a data center. The available media may be magnetic media (e.g., floppy disk, hard disk, magnetic tape), optical media (e.g., DVD), or semiconductor media (e.g., Solid State Disk (SSD)).

It should be noted that in this document, relational terms such as first and second are used merely to distinguish one entity or operation from another, and do not necessarily require or imply any such actual relationship or order between these entities or operations. Moreover, the terms "include," "comprise," or any other variants are intended to cover non-exclusive inclusions, such that a process, method, article, or apparatus that includes a series of elements not only includes those elements but also includes other elements not explicitly listed, or further includes elements that are inherent to such process, method, article, or apparatus. In the absence of further limitations, elements defined by the phrase "including a ..." do not exclude the presence of additional identical elements in the process, method, article, or apparatus that includes the elements.

The examples in this specification are described in a related manner, and the same or similar parts between examples can refer to each other. Each example focuses on explaining the differences from other examples. In particular, for the examples of AP, terminal, apparatus, computer-readable storage medium, and computer program product, since they are basically similar to the method examples, the descriptions are relatively simple, and relevant parts can refer to the description of the method examples.

The above descriptions are merely the preferred examples of the present disclosure and are not intended to limit the scope of protection of the present disclosure. Any modifications, equivalent replacements, improvements, etc., made within the spirit and principles of the present disclosure are all included within the scope of protection of the present disclosure.

## Claims

1. A data transmission method, wherein the data transmission method is applied to an Access Point, AP, and the method comprises:
performing data transmission with a terminal through subcarriers comprised in a Multi-Resource Unit, MRU corresponding to the terminal;
wherein MRUs corresponding to different terminals are different; each MRU comprises multiple distributed Resource Units, RUs, and subcarriers comprised in each distributed RU are spaced by other subcarriers that do not belong to the distributed RU;
or
performing data transmission with the terminal through subcarriers comprised in a distributed RU or a normal RU corresponding to the terminal;
wherein subcarriers comprised in each distributed RU are spaced by other subcarriers that do not belong to the distributed RU; in all subcarriers except for preset Null subcarriers that do not participate in data transmission, subcarriers comprised in each normal RU are adjacent to each other; and distributed RUs and normal RUs constitute a Mix RU that is used by all terminals accessing the AP.

2. The method according to claim 1, wherein the method further comprises:
in all subcarriers except for preset subcarriers that do not participate in distributed RU allocation, arranging the remaining subcarriers in order of indexes of the subcarriers;
between every two subcarriers belonging to a same distributed RU, placing a first preset number of subcarriers belonging to other distributed RUs;
wherein the preset subcarriers that do not participate in the distributed RU allocation comprise preset Null subcarriers that do not participate in data transmission.

3. The method according to claim 2, wherein an index of the distributed RU is represented by an index of a first subcarrier, an index of a last subcarrier comprised in the distributed RU, and a first value;
wherein the first value is a sum of the first preset number and a second value.

4. The method according to claim 2, wherein the Null subcarriers are located at a middle position of all subcarriers in a transmission bandwidth, and the Null subcarriers are Direct Current, DC subcarriers.

5. The method according to claim 2, wherein there are Null subcarriers at a frontmost position of, at a backmost position of, and at a middle position of all subcarriers in a transmission bandwidth, respectively, and the Null subcarriers located at the middle position are DC subcarriers.

6. The method according to claim 2, wherein a second preset number of Null subcarriers exist at a middle position of all subcarriers in a transmission bandwidth, and except for the second preset number of Null subcarriers located at the middle position, other Null subcarriers are located at any position of all subcarriers, wherein the Null subcarriers located at the middle position are DC subcarriers.

7. The method according to claim 1, wherein an index of the normal RU is represented by an index of a first subcarrier and an index of a last subcarrier comprised in the normal RU.

8. The method according to claim 1, wherein an index of the MRU is represented by indexes of the distributed RUs comprised.

9. The method according to claim 1, wherein a number of the distributed RUs comprised in each MRU is the same, and distributed RUs comprised in different MRUs are different;
a third preset number of distributed RUs belonging to other MRUs are interposed between every two distributed RUs belonging to a same MRU.

10. The method according to any one of claims 2-6, wherein the method further comprises:
sending a first trigger frame to the terminal, wherein the first trigger frame comprises a variant user information field that is to carry a first parameter, a second parameter and a third parameter, wherein the first parameter represents an index of a RU corresponding to a data transmission bandwidth, the second parameter represents a first value, which is a sum of the first preset number and a second value, and the third parameter represents a type of the RU which is the MRU or the Mix RU;
receiving a trigger frame response sent by the terminal based on the first trigger frame;
sending a Downlink Physical Protocol Data Unit, DL PPDU to the terminal, wherein the DL PPDU comprises a common information field that is to carry a fourth parameter representing the data transmission bandwidth, so that the terminal determines indexes of subcarriers in a RU corresponding to the terminal based on the first parameter, the second parameter, the third parameter, the fourth parameter and pre-stored first information; wherein the first information represents a correspondence between the data transmission bandwidth, the index of the RU, the first value, the type of the RU and the indexes of the subcarriers;
receiving Acknowledgment, ACK information sent by the terminal.

11. The method according to any one of claims 2-6, wherein the method further comprises:
sending a second trigger frame to the terminal, wherein the second trigger frame comprises a variant user information field that is to carry a fifth parameter, a sixth parameter and a seventh parameter, so that the terminal determines indexes of subcarriers in a RU corresponding to the terminal based on a current data transmission bandwidth, the fifth parameter, the sixth parameter, the seventh parameter and pre-stored first information; wherein the fifth parameter represents an index of a RU corresponding to the data transmission bandwidth, the sixth parameter represents a first value, and the seventh parameter represents a type of the RU which is the MRU or the Mix RU; the first information represents a correspondence between the data transmission bandwidth, the index of the RU, the first value, the type of the RU, and the indexes of the subcarriers; and the first value is a sum of the first preset number and a second value;
receiving an Uplink Physical Protocol Data Unit, UL PPDU sent by the terminal, wherein the UL PPDU comprises a common information field that is to carry an eighth parameter representing the data transmission bandwidth;
determining the indexes of the subcarriers in the RU corresponding to the terminal based on the fifth parameter, the sixth parameter, the seventh parameter, the eighth parameter and the pre-stored first information;
sending ACK information to the terminal.

12. The method according to any one of claims 1-9, wherein a number of the subcarriers comprised in the distributed RU or the normal RU is 26, 52 or 106.

13. The method according to any one of claims 2-6, wherein when a data transmission bandwidth is 20MHz, the first preset number is 3 or 8; and
when the data transmission bandwidth is 40MHz, the first preset number is 8 or 17.

14. A data transmission method, wherein the data transmission method is applied to a terminal, and the method comprises:
performing data transmission with an AP through subcarriers comprised in a Multi-Resource Unit, MRU corresponding to the terminal;
wherein MRUs corresponding to different terminals are different; each MRU comprises multiple distributed Resource Units, RUs, and subcarriers comprised in each distributed RU are spaced by other subcarriers that do not belong to the distributed RU;
or
performing data transmission with the AP through subcarriers comprised in a distributed RU or a normal RU corresponding to the terminal;
wherein subcarriers comprised in each distributed RU are spaced by other subcarriers that do not belong to the distributed RU; in all subcarriers except for preset Null subcarriers that do not participate in data transmission, subcarriers comprised in each normal RU are adjacent to each other; and distributed RUs and normal RUs constitute a Mix RU that is used by all terminals accessing the AP.

15. The method according to claim 14, wherein the method further comprises:
in all subcarriers except for preset subcarriers that do not participate in distributed RU allocation, arranging the remaining subcarriers in order of indexes of the subcarriers;
between every two subcarriers belonging to a same distributed RU, placing a first preset number of subcarriers belonging to other distributed RUs;
wherein the preset subcarriers that do not participate in the distributed RU allocation comprise preset Null subcarriers that do not participate in data transmission.

16. The method according to claim 15, wherein an index of the distributed RU is represented by an index of a first subcarrier, an index of a last subcarrier comprised in the distributed RU, and a first value;
wherein the first value is a sum of the first preset number and a second value.

17. The method according to claim 15, wherein the Null subcarriers are located at a middle position of all subcarriers in a transmission bandwidth, and the Null subcarriers are Direct Current, DC subcarriers.

18. The method according to claim 15, wherein there are Null subcarriers at a frontmost position of, at a backmost position of, and at a middle position of all subcarriers in a transmission bandwidth, respectively, and the Null subcarriers located at the middle position are DC subcarriers.

19. The method according to claim 15, wherein a second preset number of Null subcarriers exist at a middle position of all subcarriers in a transmission bandwidth, and except for the second preset number of Null subcarriers located at the middle position, other Null subcarriers are located at any position of all subcarriers, wherein the Null subcarriers located at the middle position are DC subcarriers.

20. The method according to claim 14, wherein an index of the normal RU is represented by an index of a first subcarrier and an index of a last subcarrier comprised in the normal RU.

21. The method according to claim 20, wherein an index of the MRU is represented by indexes of the distributed RUs comprised.

22. The method according to claim 20, wherein a number of the distributed RUs comprised in each MRU is the same, and distributed RUs comprised in different MRUs are different;
a third preset number of distributed RUs belonging to other MRUs are interposed between every two distributed RUs belonging to a same MRU.

23. The method according to any one of claims 15-19, wherein the method further comprises:
receiving a first trigger frame sent by the AP, wherein the first trigger frame comprises a variant user information field that is to carry a first parameter, a second parameter and a third parameter, wherein the first parameter represents an index of a RU corresponding to a data transmission bandwidth, the second parameter represents a first value, which is a sum of the first preset number and a second value, and the third parameter represents a type of the RU which is the MRU or the Mix RU;
replying to the AP with a trigger frame response;
receiving a Downlink Physical Protocol Data Unit, DL PPDU sent by the AP, wherein the DL PPDU comprises a common information field that is to carry a fourth parameter representing the data transmission bandwidth;
determining indexes of subcarriers in a RU corresponding to the terminal based on the first parameter, the second parameter, the third parameter, the fourth parameter and pre-stored first information; wherein the first information represents a correspondence between the data transmission bandwidth, the index of the RU, the first value, the type of the RU and the indexes of the subcarriers;
replying to the AP with Acknowledgment, ACK information.

24. The method according to any one of claims 15-19, wherein the method further comprises:
receiving a second trigger frame sent by the AP, wherein the second trigger frame comprises a variant user information field that is to carry a fifth parameter, a sixth parameter and a seventh parameter, the fifth parameter represents an index of a RU corresponding to a data transmission bandwidth, the sixth parameter represents a first value, and the seventh parameter represents a type of the RU that is the MRU or the Mix RU; and the first value is a sum of the first preset number and a second value;
determining indexes of subcarriers in a RU corresponding to the terminal based on the current data transmission bandwidth, the fifth parameter, the sixth parameter, the seventh parameter and pre-stored first information;
sending an Uplink Physical Protocol Data Unit, UL PPDU to the AP, wherein the UL PPDU comprises a common information field that is to carry an eighth parameter so that after receiving the eighth parameter, the AP determines the indexes of the subcarriers in the RU corresponding to the terminal based on the fifth parameter, the sixth parameter, the seventh parameter, the eighth parameter and the pre-stored first information, wherein the eighth parameter represents the data transmission bandwidth, and the first information represents a correspondence between the data transmission bandwidth, the index of the RU, the first value, the type of the RU and the indexes of the subcarriers;
receiving ACK information sent by the AP.

25. The method according to any one of claims 14-22, wherein a number of the subcarriers comprised in the distributed RU or the normal RU is 26, 52, or 106.

26. The method according to any one of claims 15-19, wherein when a data transmission bandwidth is 20MHz, the first preset number is 3 or 8; and
when the data transmission bandwidth is 40MHz, the first preset number is 8 or 17.

27. An Access Point, wherein the Access Point, AP comprises:
a processor;
a transceiver;
a machine-readable storage medium, wherein the machine-readable storage medium stores machine-executable instructions that can be executed by the processor; and the machine-executable instructions cause the processor to execute the method according to any one of claims 1-13.

28. A terminal, wherein the terminal comprises:
a processor;
a transceiver;
a machine-readable storage medium, wherein the machine-readable storage medium stores machine-executable instructions that can be executed by the processor; and the machine-executable instructions cause the processor to execute the method according to any one of claims 14-26.

29. A data transmission apparatus, wherein the data transmission apparatus is applied to an Access Point, AP, and the apparatus comprises:
a first data transmission module, to perform data transmission with a terminal through subcarriers comprised in a Multi-Resource Unit, MRU corresponding to the terminal;
wherein MRUs corresponding to different terminals are different; each MRU comprises multiple distributed Resource Units, RUs, and subcarriers comprised in each distributed RU are spaced by other subcarriers that do not belong to the distributed RU;
or
a second data transmission module, to perform data transmission with the terminal through subcarriers comprised in a distributed RU or a normal RU corresponding to the terminal;
wherein subcarriers comprised in each distributed RU are spaced by other subcarriers that do not belong to the distributed RU; in all subcarriers except for preset Null subcarriers that do not participate in data transmission, subcarriers comprised in each normal RU are adjacent to each other; and distributed RUs and normal RUs constitute a Mix RU that is used by all terminals accessing the AP.

30. A data transmission apparatus, wherein the data transmission apparatus is applied to a terminal, and the apparatus comprises:
a third data transmission module, to perform data transmission with an AP through subcarriers comprised in a Multi-Resource Unit, MRU corresponding to the terminal;
wherein MRUs corresponding to different terminals are different; each MRU comprises multiple distributed Resource Units, RUs, and subcarriers comprised in each distributed RU are spaced by other subcarriers that do not belong to the distributed RU;
or
a fourth data transmission module, to perform data transmission with the AP through subcarriers comprised in a distributed RU or a normal RU corresponding to the terminal;
wherein subcarriers comprised in each distributed RU are spaced by other subcarriers that do not belong to the distributed RU; in all subcarriers except for preset Null subcarriers that do not participate in data transmission, subcarriers comprised in each normal RU are adjacent to each other; and distributed RUs and normal RUs constitute a Mix RU that is used by all terminals accessing the AP.

31. A machine-readable storage medium, wherein the machine-readable storage medium stores machine-executable instructions, which, when called and executed by a processor, cause the processor to implement the method according to any one of claims 1-13 or 14-26.

32. A computer program product, wherein the computer program product causes a processor to implement the method according to any one of claims 1-13 or 14-26.
